# EUROPÄISCHE PATENTSCHRIFT

(11) **EP 3 328 691 B1**
(45) Veröffentlichungstag und Bekanntmachung des Hinweises auf die Patenterteilung: **24.08.2022**
(21) Anmeldenummer: 16750413.3
(22) Anmeldetag: 26.07.2016
(51) Int. Cl.: B60R 25/102, B60R 25/24

(54) **VORRICHTUNGEN, VERFAHREN UND COMPUTERPROGRAMME ZUM HERSTELLEN EINER FUNKVERBINDUNG BASIEREND AUF PROXIMITÄTSINFORMATION**
APPARATUSES, METHODS, AND COMPUTER PROGRAMS FOR ESTABLISHING A RADIO CONNECTION ON THE BASIS OF PROXIMITY INFORMATION
DISPOSITIFS, PROCÉDÉS ET PROGRAMMES INFORMATIQUES POUR LA RÉALISATION D'UNE LIAISON RADIO SUR LA BASE D'INFORMATIONS DE PROXIMITÉ

(30) Priorität: 29.07.2015 DE 102015214336
(43) Veröffentlichungstag der Anmeldung: 06.06.2018
(73) Patentinhaber: Volkswagen Aktiengesellschaft, 38440 Wolfsburg (DE); HELLA GmbH & Co. KGaA, 59552 Lippstadt (DE)
(72) Erfinder: WEGHAUS, Ludger, 59556 Lippstadt (DE); HAUPT, Hannes, 38108 Braunschweig (DE)
(74) Vertreter: Neusser, Sebastian
(86) Internationale Anmeldenummer: PCT/EP2016/067841
(87) Internationale Veröffentlichungsnummer: WO 2017/017114

(56) Entgegenhaltungen:
- WO-A1-2014/125353
- DE-A1-102012 111 344
- US-A1- 2011 257 817

## Beschreibung

Die WO 2014/125353 A1 beschreibt ein Kommunikationssystem, welches eine in einem Fahrzeug befindliche Vorrichtung, einen mobilen Anschluss und ein Mobilgerät umfasst. Dabei kann der mobile Anschluss ein Mobiltelefon aufweisen. Eine drahtlose Kommunikation zwischen dem mobilen Anschluss und der im Fahrzeug befindlichen Vorrichtung und dem Mobilgerät wird beschrieben.

Die US 2011 / 257817 A1 offenbart ein System zur Kommunikation mit einem Fahrzeug, welches ein Steuermodul umfasst, das mit einem RKE-Empfänger (Remote Keyless Entry) ausgestattet und so konfiguriert ist, dass es Fahrzeugfunktionen in Reaktion auf ein RKE-Signal steuert. Das System umfasst weiter einen Anhänger, der mit einem RKE-Sender und einem Kurzstrecken-Transceiver ausgestattet ist.

Die DE 10 2012 111 344 A1 beschreibt eine tragbare Fahrzeugeinrichtung, welche einen Drahtloskommunikationsteil, der Drahtloskommunikation mit einem Fahrzeug durchführt, einen Kurzdistanz-Drahtloskommunikationsteil, der eine Kurzdistanz-Drahtloskommunikation mit einem mobilen Endgerät durchführt, und einen Fahrzeuginformationserfassungsteil, der eine Fahrzeuginformation über das Fahrzeug erfasst, umfasst. Dabei wird die Fahrzeuginformation von dem Fahrzeug durch eine Drahtloskommunikation gesendet.

Die Sicherheit für die Zugangs- und Fahrberechtigung zu einem Fahrzeug nimmt meist eine zentrale Stellung ein. Oft wird ein hoher Aufwand betrieben, um einen unautorisierten Zugang zu einem Fahrzeug zu unterbinden. Gleiches gilt für die Fahrberechtigung. Fahrzeugschlüssel umfassen oft ausgeklügelte Sicherheitssysteme, um ein Kopieren der Schlüssel oder einen Zugang zum Fahrzeug oder dessen Mobilität ohne gültigen Schlüssel zu verhindern oder zu erschweren. Diese Sicherheitssysteme können beispielsweise auf einem Transponder basieren, welcher durch ein Magnetfeld eines Wegfahrsicherungssystems aktiviert wird, und welcher einen elektronischen Zugangsschlüssel an das Fahrzeug übermitteln könnte.

Zusätzlich zu klassischen Zugangssystemen werden Fahrzeugschlüssel entwickelt, welche einen Zugang zum Fahrzeug ermöglichen können, ohne dass eine Übertragung eines Schlüssels explizit von einem Benutzer aktiviert wird (sog. Schlüsselfreier Zugang, auch engl. Keyless Entry) oder ein Starten des Fahrzeugs ohne ein Einführen des Fahrzeugschlüssels in ein Zündschloss des Fahrzeugs ermöglichen können (sog. Schlüsselfreies Starten, auch engl. Keyless Go). Dieser Zugang kann beispielsweise auf einer Funktechnologie basieren, beispielsweise BlueTooth Low Energy (BTLE). Solche Nahfunktechnologien können beispielsweise auch von Mobilgeräten unterstützt werden, beispielsweise von erweiterbaren Mobiltelefonen (auch engl. Smartphones).

Es besteht daher der Bedarf, ein Konzept für eine Integration von Mobilgeräten in einen Sicherheitskontexts eines Fahrzeugs bereitzustellen, das eine Verbesserung der Sicherheit eines Zugangs zu Fahrzeuginformationen und/oder Fahrzeugfunktionen mittels eines Mobilgeräts ermöglicht. Diesem Bedarf wird durch eine Vorrichtung für einen Fahrzeugschlüssel (z.B. einen Funkschlüssel) gemäß Anspruch 1, eine Vorrichtung für ein Fahrzeugkontrollsystem gemäß Anspruch 6 und eine Vorrichtung für ein Mobilgerät gemäß Anspruch 11 Rechnung getragen.

Einige Ausführungsbeispiele können dies beispielsweise durch eine Paarung (auch engl. Pairing) oder Bindung (auch engl. Bonding) des Mobilgeräts an einen Fahrzeugschlüssel (z.B. einen Funkschlüssel) ermöglichen, beispielsweise über ein Zugangs-und Fahrberechtigungssystem mit kontrolliertem Anlernvorgang für mobile Endgeräte. In folgenden wird der Begriff Pairing verwendet werden, welcher beispielsweise einer Paarung von mehreren Geräten über einen Protokollkontext, einen Austausch von Verbindungs- und/oder Verschlüsselungsinformation und/oder ein Vorhalten von gemeinsamen Verbindungsparametern in zwei gepairten Geräten umfassen kann. In Ausführungsbeispielen könnte beispielsweise ein Fahrzeugschlüssel in einen Pairing-Zustand versetzt werden, in dem ein Mobilgerät mit dem Fahrzeugschlüssel ein Pairing eingehen kann. Dieser Pairing-Zustand könnte beispielsweise davon abhängen, ob der Schlüssel sich innerhalb des Fahrzeugs befindet. Die Anwesenheit des Schlüssels könnte der Fahrzeugschlüssel in Ausführungsbeispielen basierend auf einer Proximitätsinformation eines Fahrzeugkontrollsystems des Fahrzeugs (z.B. einer Entfernungsinformation, die angibt, wie weit der Fahrzeugschlüssel von dem Fahrzeugkontrollsystem und damit von einem Fahrzeug entfernt ist) bestimmen. Falls sich der Fahrzeugschlüssel im Fahrzeug befindet könnte sich dieser mit dem Mobilgerät pairen, und könnte dem Mobilgerät beispielsweise einen Zugriff auf Funktionen und/oder Information des Fahrzeugschlüssels und/oder des Fahrzeugs ermöglichen.

Eine Vorrichtung für einen Fahrzeugschlüssel wird bereitgestellt. Die Vorrichtung umfasst eine erste Schnittstelle, ausgebildet zur Kommunikation mit einem Fahrzeugkontrollsystem. Die Vorrichtung umfasst ferner eine zweite Schnittstelle, ausgebildet zur Kommunikation über eine Funkverbindung (insbesondere zu einem Mobilgerät). Die Vorrichtung umfasst ferner ein Kontrollmodul, ausgebildet zum Erhalten von Proximitätsinformation von dem Fahrzeugkontrollsystem über die erste Schnittstelle. Das Kontrollmodul ist ferner ausgebildet zum Herstellen einer Funkverbindung über die zweite Schnittstelle falls die Proximitätsinformation auf eine räumliche Nähe des Fahrzeugschlüssels zum Fahrzeugkontrollsystem hindeutet. Durch die Nutzung der Proximitätsinformation als Bedingung zum Herstellen einer Funkverbindung kann in Ausführungsbeispielen eine Sicherheit einer Authentifizierung erhöht werden. Durch ein Koppeln des Fahrzeugschlüssels über eine Funkverbindung, beispielsweise mit einem Mobilgerät oder mit dem Fahrzeugkontrollsystem basierend auf der Proximitätsinformation kann die Funkverbindung in Ausführungsbeispielen gegenüber dem Fahrzeugschlüssel, der Fahrzeugkontrollsystem und/oder dem Mobilgerät authentifiziert werden. Die Vorrichtung kann Bestandteil des Fahrzeugschlüssels sein, welcher insbesondere nicht das Mobilgerät (z.B. ein Smartphone oder Mobiltelefon) ist. D.h. der Fahrzeugschlüssel kann die Vorrichtung umfassen.

Dabei wird unter einem Fahrzeugschlüssel insbesondere eine elektronische Vorrichtung verstanden, welche direkt mittels Funk mit dem Fahrzeugkontrollsystem des Fahrzeugs kommuniziert, um eine Fahrzeugfunktion (z.B. Verriegeln, Entriegeln) des Fahrzeugs zu aktivieren. Der Fahrzeugschlüssel weist insbesondere keine Mobilfunkfunktionalität zur Sprachübermittlung auf.

In manchen Ausführungsbeispielen kann das Herstellen der Funkverbindung den Austausch von Funkverbindungsparametern umfassen. Das Kontrollmodul könnte ferner ausgebildet sein, ein Funkverbindungs-Pairing für die Funkverbindung zu bestimmen. Der Austausch von Funkverbindungsparametern kann in manchen Ausführungsbeispielen eine Voraussetzung für das Herstellen einer Funkverbindung sein. Das Bestimmen eines Funkverbindungs-Pairings könnte ein dauerhartes Pairing und/oder Authentifizierung des Fahrzeugschlüssels und eines Kommunikationspartners ermöglichen.

In einigen Ausführungsbeispielen könnte das Kontrollmodul ausgebildet sein, die Funkverbindung mit einem Mobilgerät (z.B. einem Smartphone) herzustellen. In manchen Ausführungsbeispielen könnte das Kontrollmodul ausgebildet sein, die Funkverbindung mit dem Fahrzeugkontrollsystem herzustellen. Eine Funkverbindung zwischen dem Fahrzeugschlüssel und dem Mobilgerät könnte einen Austausch oder Abfrage von Informationen ermöglichen, beispielsweise um Zustandsinformationen des Fahrzeugschlüssels oder des Fahrzeugs dem Mobilgerät zugänglich zu machen oder um das Mobilgerät gegenüber dem Fahrzeug zu authentifizieren. Eine Funkverbindung zwischen dem Fahrzeugkontrollsystem und dem Fahrzeugschlüssel könnte eine Nutzung von Nahfunkfunktionen ermöglichen, beispielsweise Schlüssellosen Zugang und/oder Schlüsselloses Starten.

In zumindest einigen Ausführungsbeispielen könnte das Kontrollmodul ausgebildet sein, um Information über Geräteidentifikation (z.B. mit dem Mobilgerät und/oder Fahrzeugkontrollsystem) auszutauschen. Die Information über die Geräteidentifikation könnte Geräteidentifikationsinformation des Fahrzeugschlüssels, Geräteidentifikationsinformation des Mobilgeräts und/oder Geräteidentifikationsinformation des Fahrzeugkontrollsystems umfassen. In zumindest manchen Ausführungsbeispielen könnte der Fahrzeugschlüssel, das Mobilgerät und/oder das Fahrzeugkontrollsystem die Geräteidentifikationsinformation nutzen, um die Funkverbindung aufzubauen, beispielsweise durch Freischalten einer Geräteidentifikation zur Kommunikation, als Gerätepairingparameter oder als Verschlüsselungsparameter.

In manchen Ausführungsbeispielen könnte die Information über die Geräteidentifikation Verschlüsselungsinformation umfassen. Das Kontrollmodul könnte ferner ausgebildet sein, um die Funkverbindung basierend auf der Verschlüsselungsinformation herzustellen und/oder zu verschlüsseln. Eine Verschlüsselung der Funkverbindung könnte in Ausführungsbeispielen eine Sicherheit der Funkverbindung erhöhen.

Bei einer Vorrichtung für einen Fahrzeugschlüssel kann die Information über die Geräteidentifikation Verschlüsselungsinformation umfassen, und das Kontrollmodul kann ferner ausgebildet sein, die Funkverbindung basierend auf der Verschlüsselungsinformation herzustellen und/oder zu verschlüsseln.

Ein Fahrzeug umfasst das Fahrzeugkontrollsystem. Die räumliche Nähe des Fahrzeugschlüssels zum Fahrzeugkontrollsystem entspricht einer Präsenz des Fahrzeugschlüssels innerhalb des Fahrzeugs. Eine Präsenz des Fahrzeugschlüssels innerhalb des Fahrzeugs als Voraussetzung eines Pairingvorgangs erhöht die Sicherheit der darauf aufbauenden Kommunikationsprozesse. Mit anderen Worten wird die Funkverbindung zwischen dem Fahrzeugschlüssel und dem Mobilgerät oder der Pairingvorgang zwischen dem Fahrzeugschlüssel und dem Mobilgerät nur dann hergestellt bzw. durchgeführt, wenn gleichzeitig der Fahrzeugschlüssel innerhalb des Fahrzeugs erfasst wird.

Gemäß einer weiteren erfindungsgemäßen Ausführungsform wird die Funkverbindung zwischen dem Fahrzeugschlüssel und dem Mobilgerät oder der Pairingvorgang zwischen dem Fahrzeugschlüssel und dem Mobilgerät nur dann hergestellt bzw. durchgeführt, wenn sich gleichzeitig der Fahrzeugschlüssel in unmittelbarer Nähe des Mobilgeräts befindet (z.B. nur dann, wenn sich Fahrzeugschlüssel und Mobilgerät berühren). Die unmittelbare Nähe zum Fahrzeugschlüssel könnte beispielsweise vom Mobilgerät anhand seiner RFID-Funktionalität erfasst werden, indem z.B. das Mobilgerät anhand der RFID-Funktionalität ein Vorhandensein eines (passiven) Transponders des Fahrzeugschlüssels erfasst. Die Ausführform bedingt demnach, dass sich Fahrzeugschlüssel und Mobilgerät innerhalb des Fahrzeugs befinden.

In zumindest manchen Ausführungsbeispielen könnte das Kontrollmodul ferner ausgebildet sein, um Information über einen Verbindungsauslöser zu erhalten. Das Kontrollmodul 26 könnte ferner ausgebildet ist, die Funkverbindung basierend auf der Information über den Verbindungsauslöser herzustellen. Die Information über den Verbindungsauslöser und damit der Verbindungsauslöser selbst könnte durch eine Betätigung mindestens einer Taste des Mobilgeräts erzeugt werden. Die Funkverbindung könnte beispielsweise einer Bluetooth-Verbindung, einer Kurz-Distanz-Verbindung, einer Near-Field-Communication-Verbindung, NFC, oder einer Nahfunkverbindung entsprechen. Die Information über den Verbindungsauslöser könnte beispielsweise genutzt werden, um einen Wechsel in den Pairing-Zustand zu initiieren. Die Nutzung von Bluetooth-, Kurz-Distanz, NFC und/oder Nahfunkverbindungen kann eine Verbindung basierend auf etablierten Protokollen, etwa mit Mobilgeräten verschiedener Hersteller ermöglichen.

Ferner wird eine Vorrichtung für ein Fahrzeugkontrollsystem bereitgestellt. Die Vorrichtung umfasst eine erste Schnittstelle, ausgebildet zur Kommunikation mit einem Fahrzeugschlüssel. Die Vorrichtung umfasst ferner eine zweite Schnittstelle, ausgebildet zur Kommunikation über eine Kommunikationsverbindung. Die Vorrichtung umfasst ferner ein Kontrollmodul, ausgebildet zum Empfangen von Information über eine Geräteidentifikation über die erste Schnittstelle oder die zweite Schnittstelle von dem Fahrzeugschlüssel. Das Kontrollmodul ist ferner ausgebildet, um über die zweite Schnittstelle basierend auf der Information über die Geräteidentifikation zu kommunizieren. In zumindest manchen Ausführungsbeispielen könnte das Fahrzeugkontrollsystem die Information über die Geräteidentifikation nutzen, um die Funkverbindung aufzubauen, beispielsweise durch Freischalten einer Geräteidentifikation zur Kommunikation, als Gerätepairingparameter oder als Verschlüsselungsparameter, und damit beispielsweise eine Sicherheit einer Authentifizierung erhöhen. Die Vorrichtung kann Bestandteil des Fahrzeugkontrollsystems sein. D.h. das Fahrzeugkontrollsystem kann die Vorrichtung umfassen.

Das Kontrollmodul ist ausgebildet, um Proximitätsinformation basierend auf einer räumlichen Nähe des Fahrzeugschlüssels zum Fahrzeugkontrollsystem zu bestimmen. Das Kontrollmodul könnte ferner ausgebildet sein, um die Proximitätsinformation dem Fahrzeugschlüssel bereitzustellen. Durch die Bereitstellung der Proximitätsinformation, beispielsweise als Bedingung zum Herstellen einer Funkverbindung kann in Ausführungsbeispielen eine Sicherheit einer Authentifizierung erhöht werden.

In manchen Ausführungsbeispielen kann die Information über die Geräteidentifikation Geräteidentifikationsinformation des Fahrzeugschlüssels umfassen. Das Kontrollmodul könnte beispielsweise ausgebildet sein, um die Kommunikationsverbindung mit dem Fahrzeugschlüssel basierend auf der Geräteidentifikationsinformation des Fahrzeugschlüssels herzustellen. Eine Funkverbindung zwischen dem Fahrzeugkontrollsystem und dem Fahrzeugschlüssel könnte eine Nutzung von Nahfunkfunktionen ermöglichen, beispielsweise Schlüssellosen Zugang und/oder Schlüsselloses Starten. Die Sicherheit der Funkverbindung könnte beispielsweise basierend auf der Geräteidentifikationsinformation des Fahrzeugschlüssels erhöht werden.

In einigen Ausführungsbeispielen könnte die Information über die Geräteidentifikation Geräteidentifikationsinformation eines Mobilgeräts umfassen. Das Kontrollmodul könnte ausgebildet sein, um die Kommunikationsverbindung mit dem Mobilgerät basierend auf der Geräteidentifikationsinformation des Mobilgeräts herzustellen. Eine Funkverbindung zwischen dem Fahrzeugkontrollsystem und dem Mobilgerät könnte einen Abruf von Fahrzeuginformation und einen Zugriff auf Fahrzeugfunktionen für das Mobilgerät ermöglichen. Die Sicherheit der Funkverbindung könnte basierend auf der Geräteidentifikationsinformation des Mobilgeräts erhöht werden.

In zumindest manchen Ausführungsbeispielen könnte die Information über die Geräteidentifikation Verschlüsselungsinformation umfassen. Das Kontrollmodul könnte ferner ausgebildet sein, um die Kommunikationsverbindung basierend auf der Verschlüsselungsinformation herzustellen und/oder zu verschlüsseln. Eine Verschlüsselung der Kommunikationsverbindung könnte in Ausführungsbeispielen eine Sicherheit der Kommunikationsverbindung erhöhen.

In zumindest einigen Ausführungsbeispielen könnte die Kommunikationsverbindung einer Funkverbindung, einer Kurz-Distanz-Verbindung, einer Nahfunkverbindung oder einer kabelgebundenen Verbindung entsprechen. Die Nutzung von Bluetooth-, Kurz-Distanz, NFC, Nahfunkverbindungen und oder kabelgebundenen kann eine Verbindung basierend auf etablierten Protokollen, etwa mit Mobilgeräten verschiedener Hersteller ermöglichen.

Ferner wird eine Vorrichtung für ein Mobilgerät bereitgestellt. Die Vorrichtung umfasst eine Schnittstelle, ausgebildet zur Kommunikation über eine Funkverbindung. Die Vorrichtung umfasst ferner ein Kontrollmodul, ausgebildet zum Herstellen einer Funkverbindung mit einem Fahrzeugschlüssel über die Schnittstelle. Das Kontrollmodul ist ferner ausgebildet zum Bestimmen eines Funkverbindungs-Pairings für die Funkverbindung zwischen dem Fahrzeugschlüssel und dem Mobilgerät. Eine Funkverbindung zwischen dem Fahrzeugschlüssel und dem Mobilgerät könnte einen Austausch oder Abfrage von Informationen ermöglichen, beispielsweise um Zustandsinformationen des Fahrzeugschlüssels oder des Fahrzeugs dem Mobilgerät zugänglich zu machen oder um das Mobilgerät gegenüber dem Fahrzeug zu authentifizieren. Die Vorrichtung kann Bestandteil des Mobilgeräts (z.B. eines Smartphones oder Mobiltelefons) sein, welches insbesondere kein Fahrzeugschlüssel ist. D.h. das Mobilgerät kann die Vorrichtung umfassen.

In manchen Ausführungsbeispielen könnte das Kontrollmodul ferner ausgebildet sein, um Information über eine Geräteidentifikation mit dem Fahrzeugschlüssel über die Funkverbindung auszutauschen. In zumindest manchen Ausführungsbeispielen könnte das die Information über die Geräteidentifikation genutzt werden, um eine Funkverbindung aufzubauen, beispielsweise durch Freischalten einer Geräteidentifikation zur Kommunikation, als Gerätepairingparameter oder als Verschlüsselungsparameter, und damit beispielsweise eine Sicherheit einer Authentifizierung erhöhen.

In einigen Ausführungsbeispielen könnte die Information über die Geräteidentifikation Geräteidentifikationsinformation eines Fahrzeugkontrollsystems, Geräteidentifikationsinformation des Fahrzeugschlüssels und/oder Geräteidentifikationsinformation des Mobilgeräts umfassen. Das Kontrollmodul könnte ausgebildet sein, eine weitere Funkverbindung mit einem Fahrzeugkontrollsystem basierend auf der Information über die Geräteidentifikation herzustellen. Eine Funkverbindung zwischen dem Fahrzeugkontrollsystem und dem Mobilgerät könnte einen Abruf von Fahrzeuginformation und einen Zugriff auf Fahrzeugfunktionen für das Mobilgerät ermöglichen. Die Sicherheit der Funkverbindung könnte basierend auf der Geräteidentifikationsinformation des Mobilgeräts erhöht werden.

In zumindest manchen Ausführungsbeispielen könnte die Information über die Geräteidentifikation Verschlüsselungsinformation umfassen. Das Kontrollmodul könnte ferner ausgebildet sein, um die Funkverbindung und/oder die weitere Funkverbindung basierend auf der Verschlüsselungsinformation herzustellen und/oder zu verschlüsseln. Eine Verschlüsselung der Funkverbindung könnte in Ausführungsbeispielen eine Sicherheit der Funkverbindung erhöhen.

In zumindest einigen Ausführungsbeispielen könnte die Funkverbindung einer Bluetoothverbindung, einer Kurz-Distanz-Verbindung, einer Near-Field-Communication-Verbindung, NFC, oder einer Nahfunkverbindung entsprechen. Die Nutzung von Bluetooth-, Kurz-Distanz, NFC und/oder Nahfunkverbindungen kann eine Verbindung basierend auf etablierten Protokollen, etwa mit Mobilgeräten verschiedener Hersteller ermöglichen.

Ausführungsbeispiele stellen ferner ein Verfahren für einen Fahrzeugschlüssel bereit. Das Verfahren umfasst Kommunizieren mit einem Fahrzeugkontrollsystem über eine erste Schnittstelle insbesondere des Fahrzeugschlüssels. Das Verfahren umfasst ferner Kommunizieren über eine Funkverbindung über eine zweite Schnittstelle insbesondere des Fahrzeugschlüssels. Das Verfahren umfasst ferner Erhalten von Proximitätsinformation von dem Fahrzeugkontrollsystem. Das Verfahren umfasst ferner Herstellen einer Funkverbindung über die zweite Schnittstelle falls die Proximitätsinformation auf eine räumliche Nähe des Fahrzeugschlüssels zum Fahrzeugkontrollsystem hindeutet.

Ausführungsbeispiele stellen ferner ein Verfahren für ein Fahrzeugkontrollsystem bereit. Das Verfahren umfasst Kommunizieren mit einem Fahrzeugschlüssel über eine erste Schnittstelle insbesondere des Fahrzeugkontrollsystems. Das Verfahren umfasst ferner Kommunizieren über eine Kommunikationsverbindung über eine zweite Schnittstelle insbesondere des Fahrzeugkontrollsystems. Das Verfahren umfasst ferner Empfangen von Information über eine Geräteidentifikation über die erste Schnittstelle oder die zweite Schnittstelle von dem Fahrzeugschlüssel. Das Verfahren umfasst ferner Kommunizieren über die zweite Schnittstelle basierend auf der Information über die Geräteidentifikation.

Ausführungsbeispiele stellen ferner ein Verfahren für ein Mobilgerät bereit. Das Verfahren umfasst Kommunizieren über eine Funkverbindung. Das Verfahren umfasst ferner Herstellen einer Funkverbindung mit einem Fahrzeugschlüssel. Das Verfahren umfasst ferner Bestimmen eines Funkverbindungs-Pairings für die Funkverbindung zwischen dem Fahrzeugschlüssel und dem Mobilgerät.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Im Rahmen der vorliegenden Erfindung wird auch ein System bereitgestellt, welches eine erfindungsgemäße Vorrichtung für einen Fahrzeugschlüssel und eine erfindungsgemäße Vorrichtung für ein Fahrzeugkontrollsystem umfasst.

Schließlich wird im Rahmen der vorliegenden Erfindung ein (weiteres) System bereitgestellt, welches eine erfindungsgemäße Vorrichtung für einen Fahrzeugschlüssel, eine erfindungsgemäße Vorrichtung für ein Fahrzeugkontrollsystem und eine erfindungsgemäße Vorrichtung für ein Mobilgerät umfasst.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1: illustriert ein Blockdiagramm eines Ausführungsbeispiels einer Vorrichtung für einen Fahrzeugschlüssel;
- Fig. 2: zeigt eine Übersicht von mehreren Möglichkeiten eines (erweiterten) Fahrzeugsicherheitskontexts eines Fahrzeugs;
- Fig. 2a: zeigt eine weitere Übersicht eines (erweiterten) Fahrzeugsicherheitskontexts eines Fahrzeugs;
- Fig. 3: zeigt eine Übersicht eines konventionellen Fahrzeugsicherheitskontexts von zwei Fahrzeugen;
- Fig. 3a: zeigt eine Übersicht eines Fahrzeugsicherheitskontexts von zwei Fahrzeugen und Mobilgeräten;
- Fig. 4a: zeigt eine Übersicht einer Bindung von Fahrzeugschlüsseln an ein Fahrzeug;
- Fig. 4b: zeigt ein Ausführungsbeispiel einer Bindung eines Fahrzeugschlüssels;
- Fig. 5: zeigt ein Ausführungsbeispiel eines Herstellens einer Kommunikationsverbindung zwischen zumindest einem Fahrzeugschlüssel und einem Sendeempfänger-Modul;
- Fig. 6: illustriert ein Blockdiagramm eines Ausführungsbeispiels einer Vorrichtung für ein Fahrzeugkontrollsystem;
- Fig. 7: illustriert ein Blockdiagramm eines Ausführungsbeispiels einer Vorrichtung für ein Mobilgerät;
- Fig. 8: zeigt eine weitere Übersicht eines Fahrzeugsicherheitskontexts von zwei Fahrzeugen;
- Fig. 9a: zeigt eine weitere Übersicht eines Fahrzeugsicherheitskontexts von zwei Fahrzeugen;
- Fig. 9b: zeigt eine Übersicht einer Bindung eines Fahrzeugschlüssels an *n* Mobilgeräte;
- Fig. 10: zeigt einen beispielhaften Zusammenhang der Komponenten Fahrzeugkontrollsystem, Fahrzeugschlüssel und Mobilgerät;
- Fig. 11: zeigt ein Flussdiagramm eines Verfahrens für einen Fahrzeugschlüssel;
- Fig. 12: zeigt ein Flussdiagramm eines Verfahrens für ein Fahrzeugkontrollsystem; und
- Fig. 13: zeigt ein Flussdiagramm eines Verfahrens für ein Mobilgerät.

Die Verbreitung von Mobilgeräten, beispielsweise erweiterbaren Mobiltelefonen (auch engl. Smartphone), steigt kontinuierlich an. Die weite Verbreitung der Mobilgeräte kann beispielsweise ein großes Potential für die Nutzung innovativer Fahrzeugfunktionen über dafür geeignete Schnittstellen darstellen. Dabei kann es mehrere Möglichkeiten geben, ein Mobilgerät in den Sicherheitskontext des Fahrzeugs zu integrieren. Es besteht zunehmend Bedarf, Mobiltelefone von Nutzern in die Lage zu versetzen, bestimmte Daten mit dem Funkschlüssel und/oder dem Kfz austauschen zu können. Zumindest manche Ausführungsbeispiele könnten diesen Austausch dahingehend nutzerfreundlich absichern, dass er berechtigten Personen zur Verfügung steht und mobile Endgeräte anderer Personen ausgeschlossen sein können.

In konventionellen System erfolgt ein Einbinden von mobilen Endgeräten in Kommunikationsstrukturen eines Fahrzeugs bislang oftmals derart, dass dem Nutzer vom Fahrzeughersteller Zugangsdaten zur Verfügung gestellt werden, mit denen sich der Nutzer mit seinem Mobilgerät beim Fahrzeughersteller registrieren muss. Oftmals erfolgt dies über die Mitteilung einer PIN. Dies kann beispielsweise einen hohen logistischen Aufwand bedeuten und ist möglicherweise wenig komfortabel. Die Sicherheit bei solchen Ansätzen ist teilweise auch begrenzt.

Zumindest manche Ausführungsbeispiele können eine Nutzung von mobilen Endgeräten im automobilen (auch engl: automotive) Kontext ermöglichen. Zur Steigerung der Sicherheit könnte in manchen Ausführungsbeispielen nicht jedes beliebige Smartphone mit dem Fahrzeugschlüssel oder mit dem Fahrzeug kommunizieren dürfen. Andererseits könnte ein berechtigter Fahrzeugbesitzer beispielsweise beliebige Mobiltelefone benutzen. In einigen Ausführungsbeispielen könnte ein Fahrzeugbesitzer ein Überblick über berechtigte Mobilgeräte behalten. Ausführungsbeispiele können beispielsweise einen intuitiven Anlernvorgang für mobile Endgeräte eines Nutzers bereitstellen, wobei überprüft werden könnte, dass dieser Anlernvorgang sich innerhalb des Fahrzeugs abspielt und/oder dass die Person, die den Anlernvorgang durchführen will, über eine Fahrberechtigung verfügt. Manche Ausführungsbeispiele könnten sicherstellen, dass ein potentieller Angreifer sich im physikalischen Besitz eines gültigen Funkschlüssels befinden muss, um diese Operation durchzuführen. Fremde Mobiltelefone könnten beispielsweise ausgesperrt werden und eine Sicherheit und Privatsphäre eines Nutzers abgesichert werden. Ausführungsbeispiele könnten einen Aufwand des Fahrzeugherstellers verringern und eine höhere Flexibilität des Nutzers ermöglichen.

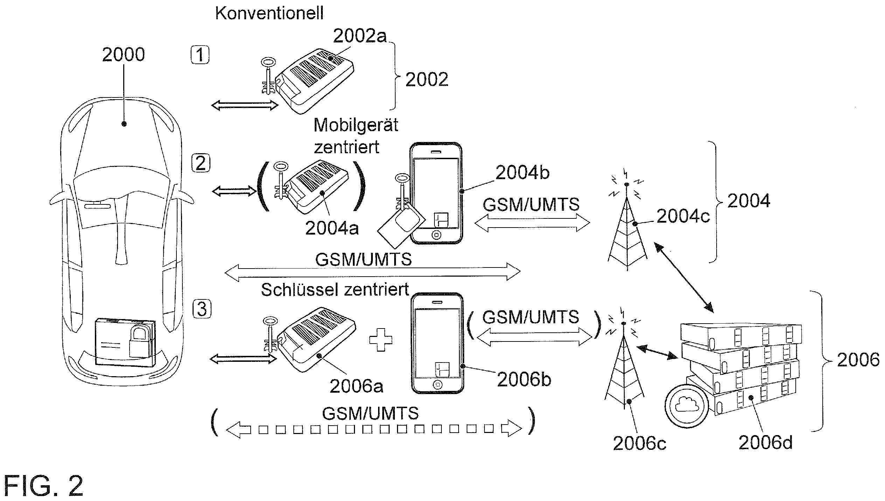

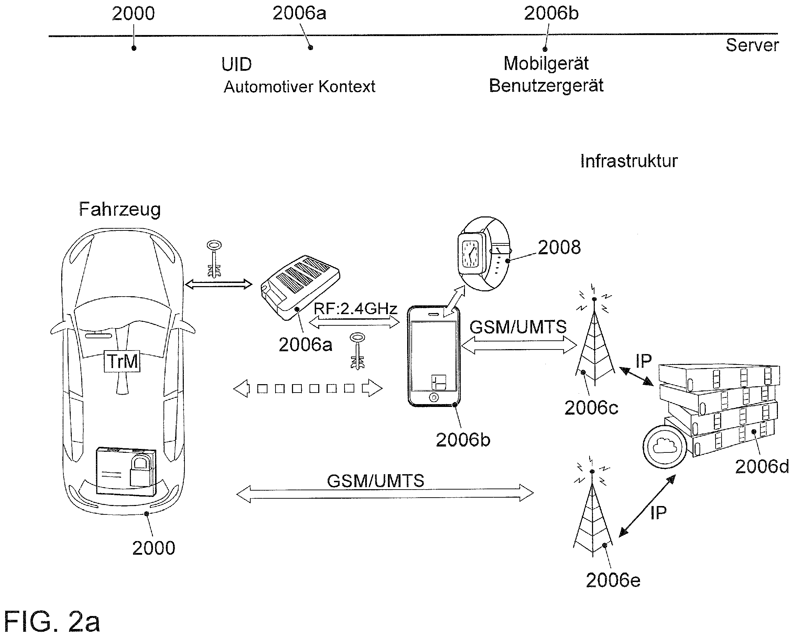

Fig. 2 zeigt eine Übersicht von mehreren Möglichkeiten eines (erweiterten) Fahrzeugsicherheitskontexts eines Fahrzeugs. 2002 zeigt einen konventionellen Fahrzeugsicherheitskontext, wobei ein Fahrzeugschlüssel 2002a (in dieser Anmeldung auch UID, User IDentification, Benutzeridentifikation genannt) im Fahrzeugsicherheitskontext eines Fahrzeugs 2000 existiert. 2004 zeigt ein erweitertes Sicherheitskonzept, wobei der Fahrzeugsicherheitskontext ein Mobilgerät 2004b und optional einen Fahrzeugschlüssel 2004a umfasst. Der Fahrzeugschlüssel 2004a ist optional direkt mit dem Fahrzeug 2000 gekoppelt, und das Mobilgerät 2004b ist über eine Basisstation 2004c und über ein mobiles Kommunikationsnetzwerk, beispielsweise über ein Global System for Mobile Communications (Weltweites System für mobile Kommunikation, GSM), ein Universal Mobile Telecommunication System (Universelles Mobiles Telekommunikationssystem, UMTS), ein Long Term Evolution-Kommunikationsnetzwerk (Langzeitevolutionskommunikationsnetzwerk, LTE) oder über ein mobiles Kommunikationsnetzwerk der 5. Generation mit dem Fahrzeug gekoppelt. 2006 zeigt ein weiteres erweitertes Sicherheitskonzept von Ausführungsbeispielen, wobei der Fahrzeugsicherheitskontext einen Fahrzeugschlüssel 2006a und ein Mobilgerät 2006b umfasst, wobei das Mobilgerät 2006b mit dem Fahrzeugschlüssel 2006a gekoppelt ist. Das Mobilgerät ist optional direkt mit dem Fahrzeug 2000 gekoppelt, und/oder optional über eine optionale Basisstation 2006c und ein mobiles Kommunikationsnetzwerk mit dem Fahrzeug gekoppelt und/oder mit einem optionalen Servermodul 2006d über die Basisstation 2006c gekoppelt.

Fig. 2a zeigt eine weitere Übersicht des Ausführungsbeispiels. Das Fahrzeug ist beispielsweise direkt mit dem Fahrzeugschlüssel 2006a gekoppelt. Das Mobilgerät 2006b ist beispielsweise über ein Radio-Frequenz (RF)-Netzwerk mit dem Fahrzeugschlüssel 2006a gekoppelt und mit der Basisstation 2006c über das mobile Kommunikationsnetzwerk. Optional kann das Mobilgerät 2006b beispielsweise mit einer intelligenten Uhr 2008 (auch engl. Smartwatch) gekoppelt sein. Optional kann das Mobilgerät 2006b ferner direkt mit dem Fahrzeug 2000 gekoppelt sein. Die Basisstation 2006c ist mit dem Servermodul 2006d gekoppelt, welches beispielsweise über eine weitere Basisstation 2006e und das mobile Kommunikationsnetzwerk mit dem Fahrzeug 2000 gekoppelt sein kann.

In der weiteren Beschreibung kann der Fahrzeugschlüssel 2006a einem Fahrzeugschlüssel 200, das Fahrzeug 2000 einem Fahrzeug 1000, und/oder das Mobilgerät 2006b einem Mobilgerät 300 entsprechen.

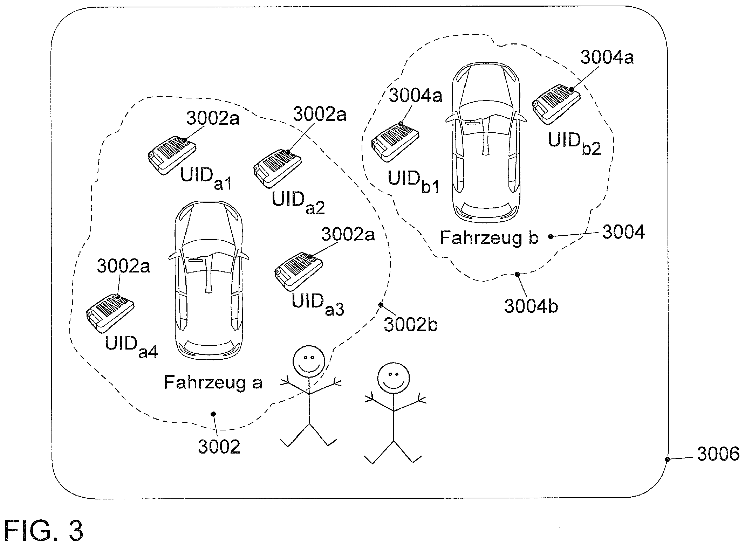

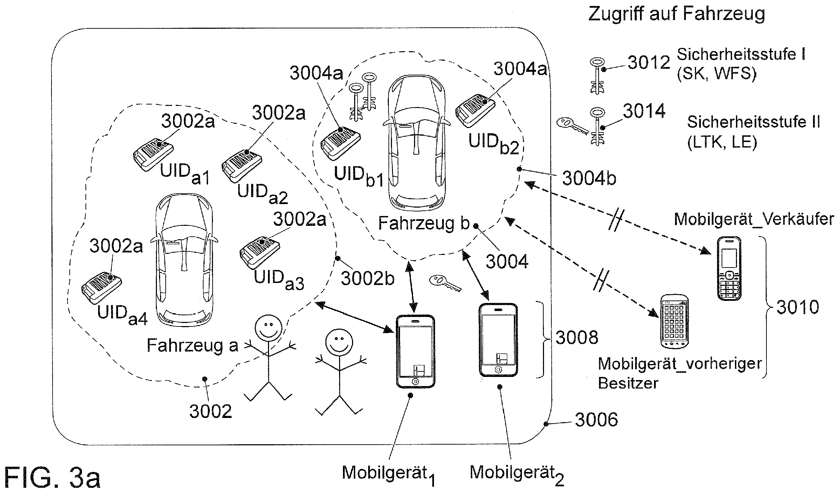

Fig. 3 zeigt eine Übersicht eines konventionellen Fahrzeugsicherheitskontexts von zwei Fahrzeugen a 3002 und b 3004. Fahrzeug a 3002 umfasst in seinem Fahrzeugsicherheitskontext 3002b Fahrzeugschlüssel (UID) a1 bis a4 3002a. Fahrzeug b 3004 umfasst in seinem Fahrzeugsicherheitskontext 3004b Fahrzeugschlüssel (UID) b1 und b2 3004a. Die beiden Fahrzeugsicherheitskontexte 3002b und 3004b sind in einem automobilen Kontext 3006 (auch engl. automotive context) umfasst.

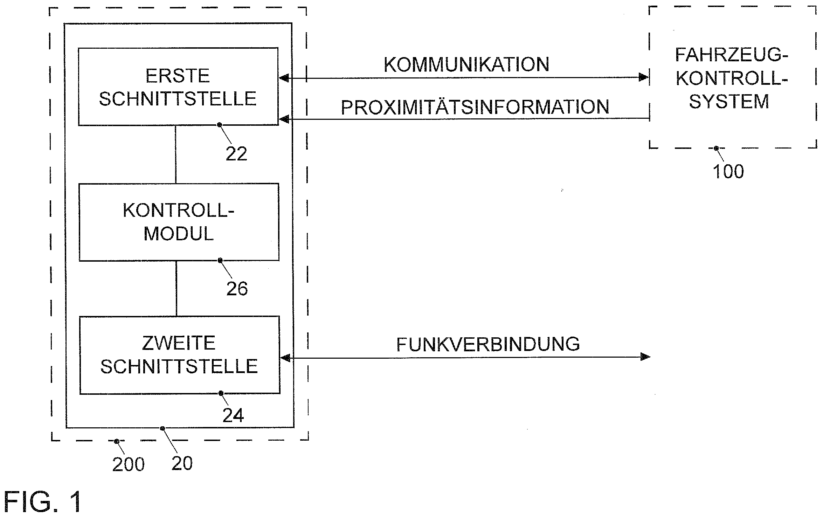

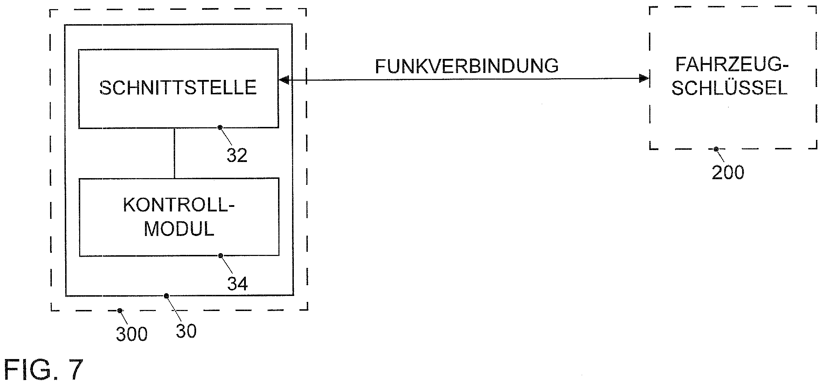

Fig. 3a zeigt zusätzlich zu den Elementen von Fig. 3 zwei Mobilgeräte 3008 innerhalb des automobilen Kontexts 3006 und zwei Mobilgeräte 3010 Mobilgerät_vorherigerBesitzer und Mobilgerät_Verkäufer. Die Fahrzeugschlüssel 3002a und 3004a haben Zugriff auf das Fahrzeug innerhalb einer ersten Sicherheitsstufe 3012, beispielsweise basierend auf einem geheimen Schlüssel (auch engl. Secret Key, SK) und/oder einer WegFahrSicherung (WFS). Die Fahrzeugschlüssel 3002a und/oder 3004a könnten beispielsweise einem Fahrzeugschlüssel 200 aus Fig. 1 entsprechen. Die Mobilgeräte 3008 könnten beispielsweise Mobilgeräten 300 aus Fig. 7 entsprechen. Die Mobilgeräte 3008 innerhalb des automobilen Kontexts 3006 haben eine geschützte Verbindung zu einem oder beiden der Fahrzeuge innerhalb einer zweiten Sicherheitsstufe 3014, beispielsweise basierend auf einem Langzeitschlüssel (auch engl. LongTerm Key, LTK) und/oder basierend auf einer Kurzstreckenfunkverbindung oder einer Nahfunkverbindung, beispielsweise basierend auf Bluetooth Low Energy (Niedrigenergie-Bluetooth, BTLE oder LE. BlueTooth kann beispielsweise BT abgekürzt werden). Die Mobilgeräte außerhalb des automobilen Kontexts 3006, etwa das Mobilgerät des vorherigen Besitzers, Mobilgerät_vorherigerBesitzer, oder das Mobilgerät des Verkäufers, Mobilgerät_Verkäufer haben keine Verbindungen zu den (also keine gemeinsamen Schlüssel mit den) Fahrzeugen 3002 und 3004.

Sicherheit kann sich in Ausführungsbeispielen aus verschiedenen Aspekten zusammensetzen:
▪ Autorisierung
   ∘ Zuweisung einer Erlaubnis, etwas zu tun oder Zugriff auf etwas zu haben
   ▪ Etwas Bereitstellen (z.B. einen Schlüssel teilen. Wenn geteilte Geheimnisse vorgehalten werden können die Geräte verbunden (auch engl. bonded oder paired (die Begriffe werden hier gleichwertig verwendet)) sein)
▪ Authentifizierung
   o Prozess um nachzuweisen, dass jemand/etwas autorisiert ist
   ▪ Etwas haben/wissen (z.B. einen Schlüssel)
▪ Vertraulichkeit (auch engl. confidentiality)
   ∘ Vorhaben, einen Inhalt geheim zu halten
   ▪ Verschlüsselung nutzen (z.B. einen weitergehenden Verschlüsselungsstandard, auch engl. Advanced Encryption Standard, AES)
▪ Integrität/Unversehrtheit
   o Keine Verfälschung (auch engl. corruption) von übertragenen Daten
   ▪ Nachrichtenauthentifizierung
▪ Privatsphäre/Datenschutz
   o Vorhaben, Anonymität zu bewahren
   ▪ Nichtöffentlichhalten von Metadaten (z.B. Ortsdaten), beispielsweise durch Wechsel von Adressen

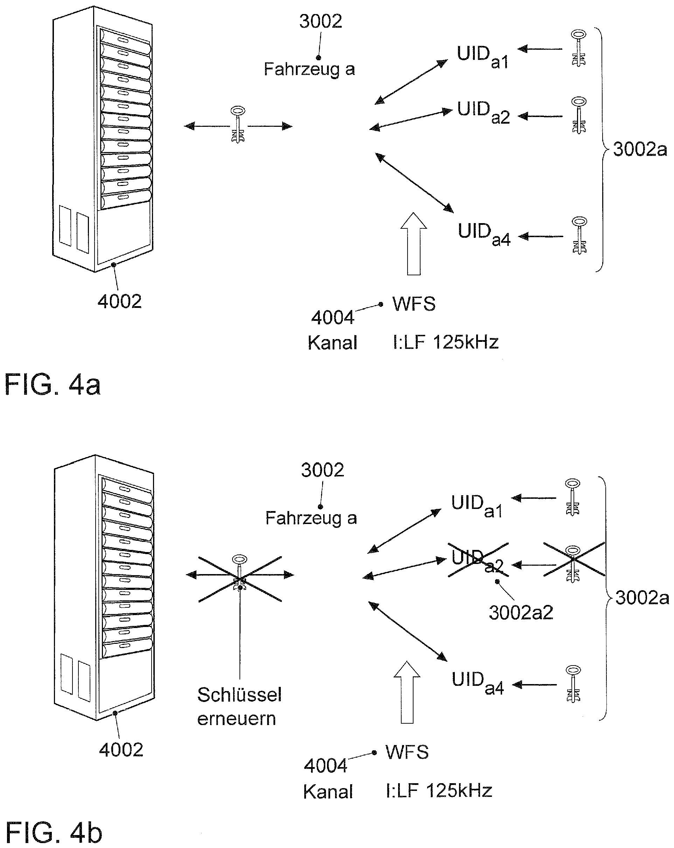

Fig. 4a zeigt eine Übersicht einer Bindung von Fahrzeugschlüsseln (UID) 3002 an ein Fahrzeug 3002. Der Prozess zur Bindung kann beispielsweise am Ende einer Fertigung bei einem Fahrzeughersteller oder in einer Werkstatt des Fahrzeugherstellers stattfinden. Die Bindung kann beispielsweise eine Verbindung zu einem Server 4002 des Fahrzeugherstellers voraussetzen, welcher beispielsweise die Autorisierungen verwaltet. Eine Überprüfung der Autorisierung im Fahrzeug kann beispielsweise durch ein Wegfahrsicherungssystem 4004 des Fahrzeugs vorgenommen werden, beispielsweise über einen niederfrequenten Kanal (auch engl. Low Frequency channel, LF). Dabei kann beispielsweise ein SK des Fahrzeugschlüssels mit einem SK des Fahrzeugs gebunden werden. Ein SK kann dabei einem geheimen Schlüssel entsprechen, welcher genutzt werden kann, um eine Authentifizierung des Fahrzeugschlüssels gegenüber dem Fahrzeug durchzuführen. Bei symmetrischen Verschlüssellungsverfahren erhalten Fahrzeug und Fahrzeugschlüssel (UID) den identischen SK.

Fig. 4b zeigt ein Ausführungsbeispiel einer Bindung eines Fahrzeugschlüssels 3002a mit dem Fahrzeug 3002a2 aus Fig. 4a. Diese kann wiederum in einer Werkstatt des Fahrzeugherstellers stattfinden und eine Verbindung zu dem Server 4002 des Fahrzeugherstellers voraussetzen. Falls der Schlüssel 3002a2 verloren wird, könnte der betreffende SK deautorisiert werden, z.B. falls er nicht gelöscht werden kann. Die betreffende Erneuerung der Schlüssels könnte beispielsweise sowohl im Fahrzeug 3002 als auch in den Schlüsseln 3002a stattfinden. Der Server 4002 des Fahrzeugherstellers könnte die Autorisierungen verwalten und nachverfolgen.

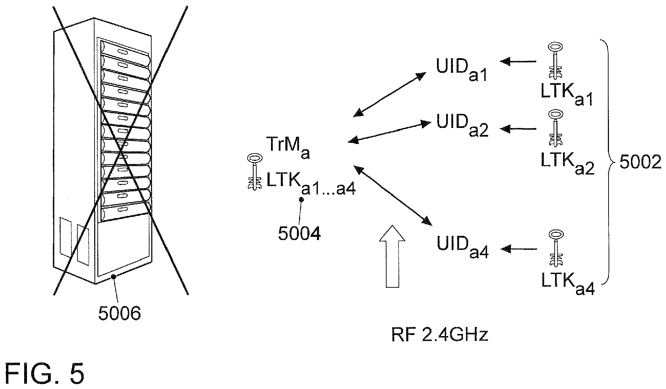

Fig. 5 zeigt ein Ausführungsbeispiel eines Herstellens einer Kommunikationsverbindung zwischen zumindest einem Fahrzeugschlüssel 5002 (der beispielsweise einem Fahrzeugschlüssel 200 aus Fig. 1 entsprechen könnte) und einem Sendeempfänger-Modul (auch engl. Transceiver Module, TrM 5004), welches beispielsweise einem Fahrzeugkontrollsystem 100 aus Fig. 1 entsprechen könne. Die Kommunikationsverbindung könnte beispielsweise einer Funkverbindung entsprechen, beispielsweise basierend auf einem 2.4GHz-Kommunikationsband oder mittels einer Kommunikation außerhalb eines Bands (auch engl. Out Of Band, OOB), etwa über einen Bluetooth-OOB-Mechanismus. Dabei könnte in manchen Ausführungsbeispielen ein Server 5006 des Fahrzeugherstellers nicht involviert sein. Das Herstellen der Kommunikationsverbindung (der Prozess der dafür sorgt, dass Fahrzeug und UID ein zueinander passendes bzw. identisches Schlüsselpaar besitzen) zwischen dem zumindest einen Fahrzeugschlüssel 5002 und dem TrM 5004 könnte beispielsweise am Ende der Fertigung oder in einer Werkstatt des Fahrzeugherstellers geschehen. Das Herstellen der Kommunikationsverbindung könnte beispielsweise geschehen, ohne dass ein bestehendes Wegfahrsicherungssystem involviert ist. In manchen Ausführungsbeispielen könnte das TrM 5004 von einer Werkstatt ausgetauscht werden. In zumindest manchen Ausführungsbeispielen könnte das Herstellen der Kommunikationsverbindung auf zumindest einem Langzeitschlüssel (LTK) basieren, beispielsweise über einen Schlüsselaustausch, wie etwa einen Diffie-Hellman-Schlüsselaustausch. Die Herstellung der Kommunikationsverbindung könnte beispielsweise während eines Pairing-Zustands oder Anlernvorgangs stattfinden. In zumindest manchen Ausführungsbeispielen können die Begriffe Pairing-Zustand, Anlernvorgang und Anlernprozess beispielsweise synonym verwendet werden.

Fig. 1 illustriert ein Blockdiagramm eines Ausführungsbeispiels einer Vorrichtung 20 für einen Fahrzeugschlüssel 200. Die Vorrichtung 20 umfasst eine erste Schnittstelle 22, ausgebildet zur Kommunikation mit einem Fahrzeugkontrollsystem 100. In Ausführungsbeispielen könnte die erste Schnittstelle 22 beispielsweise einer Schnittstelle einer Wegfahrsicherung entsprechen. Die erste Schnittstelle 22 könnte beispielsweise einer einseitigen Kommunikationsverbindung entsprechen. Die erste Schnittstelle 22 könnte beispielsweise auf einem Computerchip basieren, welcher beispielsweise über ein Magnetfeld angeregt wird, beispielsweise ein Radiofrequenz-Identifikationschip (auch engl. Radio Frequency IDentification, RFID). Die Kommunikation mit dem Fahrzeugkontrollsystem könnte beispielsweise einer drahtlosen oder einer drahtgebundenen Kommunikation entsprechen. Die Kommunikation mit dem Fahrzeugkontrollsystem könnte beispielsweise einem Empfangen und/oder Messen eines Magnetfeldes entsprechen, und oder die Kommunikation mit dem Fahrzeugkontrollsystem könnte einem Feststellen einer Aktivierung eines Computerchips durch ein Magnetfeld entsprechen.

Der Fahrzeugschlüssel 200 kann in Ausführungsbeispielen einem Schlüssel (etwa einem Zündschlüssel) eines Fahrzeugs entsprechen, der beispielsweise eine physische Schlüsselkomponente (z.B. einen Schlüsselbart) und/oder eine elektronische Schlüsselkomponente umfasst. Die physische Schlüsselkomponente könnte beispielsweise als Übertragungsmedium genutzt werden, um Signale der elektronischen Schlüsselkomponente zu übertragen. Die elektronische Schlüsselkomponente könnte beispielsweise auf einem Mikrochip und/oder einer programmierbaren Hardwarekomponente entsprechen, welche ausgebildet ist, einen elektronischen Schlüssel, beispielweisen einen geheimen Schlüssel (auch engl. Secure Key, SK) bereitzustellen. Die elektronische Schlüsselkomponente kann ausgebildet sein, den geheimen Schlüssel, oder einen verarbeiteten geheimen Schlüssel, dem Fahrzeugkontrollsystem 100 bereitzustellen, beispielsweise über eine drahtgebundene oder drahtlose Kommunikationsverbindung.

Das Fahrzeugkontrollsystem 100 könnte beispielsweise einer On-Board-Unit (OBU, an Bord befindliche Einheit) eines Fahrzeugs entsprechen oder in einer OBU des Fahrzeugs umfasst sein. Das Fahrzeugkontrollsystem 100 könnte beispielsweise einem Sendeempfängermodul (auch engl. TransceiverModule, TrM) entsprechen oder ein Sendeempfängermodul umfassen, beispielsweise eine erste Schnittstelle 12 und/oder eine zweite Schnittstelle 14 einer Vorrichtung 10 für das Fahrzeugkontrollsystem. Das Fahrzeugkontrollsystem 100 könnte beispielsweise ausgebildet sein, um Schlüsselsignale, beispielsweise des Fahrzeugschlüssels 200 und/oder eines Mobilgeräts 300, zu überprüfen und basierend auf dem Schlüsselsignal einem Benutzer des Fahrzeugschlüssels 200 und/oder des Mobilgeräts 300 Zugriff auf Fahrzeugfunktionen zu gewähren.

Die Vorrichtung 20 umfasst ferner eine zweite Schnittstelle 24, ausgebildet zur Kommunikation über eine Funkverbindung. Die Funkverbindung könnte in manchen Ausführungsbeispielen beispielsweise einer Bluetooth-Verbindung, einer Kurz-Distanz-Verbindung, einer Near-Field-Communication-Verbindung (NFC) oder einer Nahfunkverbindung entsprechen. Die Funkverbindung könnte beispielsweise einem drahtlosen lokalen Netzwerk entsprechen (auch engl. Wireless Local Area Network, WLAN), beispielsweise nach dem Standard IEEE (Institute of Electrical and Electronics Engineers) 802.11.

Die erste Schnittstelle 22 und/oder die zweite Schnittstelle 24 kann beispielsweise einem oder mehreren Eingängen und/oder einem oder mehreren Ausgängen zum Empfangen und/oder Übertragen von Informationen entsprechen, etwa in digitalen Bitwerten, analogen Signalen, Magnetfeldern, basierend auf einem Code, innerhalb eines Moduls, zwischen Modulen, oder zwischen Modulen verschiedener Entitäten.

Die Vorrichtung 20 umfasst ferner ein Kontrollmodul 26. Das Kontrollmodul 26 ist ausgebildet zum Erhalten von Proximitätsinformation von dem Fahrzeugkontrollsystem 100 über die erste Schnittstelle 22. In zumindest manchen Ausführungsbeispielen kann die Proximitätsinformation einem Bitwert und/oder einer Bitfolge entsprechen. In einigen Ausführungsbeispielen könnte die Proximitätsinformation beispielsweise einem gemessenen Magnetfeld, einer Stärke eines gemessenen Magnetfelds, einer Information, die auf ein Magnetfeld aufmoduliert wurde, und/oder einer Aktivierung eines Computerchips durch ein Magnetfeld entsprechen. In zumindest manchen Ausführungsbeispielen könnte die Proximitätsinformation beispielsweise einer gemessenen Vibration eines Fahrzeugs im Betriebszustand entsprechen. In einigen weiteren Ausführungsbeispielen könnte die Proximitätsinformation beispielsweise empfangenen Funksignalen, beispielsweise oberhalb einer vordefinierten Empfangsstärke, und/oder einem empfangenen Funk-Kommunikationsnetzwerk entsprechen.

Das Kontrollmodul 26 ist ferner ausgebildet zum Herstellen einer Funkverbindung über die zweite Schnittstelle 24 falls die Proximitätsinformation auf eine räumliche Nähe des Fahrzeugschlüssels 200 zum Fahrzeugkontrollsystem 100 hindeutet.

Die räumliche Nähe des Fahrzeugschlüssels 200 zum Fahrzeugkontrollsystem 100 könnte beispielsweise einer räumlichen Nähe des Fahrzeugschlüssels zu einer Sendeeinheit einer Schnittstelle des Fahrzeugkontrollsystems 100 entsprechen, welche ausgebildet ist, mit dem Fahrzeugschlüssel zu kommunizieren. Die räumliche Nähe könnte beispielsweise einer physischen Präsenz des Fahrzeugschlüssels 200 innerhalb eines Senderadius um die Sendeeinheit des Fahrzeugkontrollsystems 100 entsprechen, wobei eine empfangene Signalstärke des gesendeten Signals der Sendeeinheit am Fahrzeugschlüssel beispielsweise über einem vordefinierten Schwellenwert für die Signalstärke liegen könnte.

In zumindest manchen Ausführungsbeispielen könnte ein Fahrzeug 1000 das Fahrzeugkontrollsystem 100 umfassen. Die räumliche Nähe des Fahrzeugschlüssels 200 zum Fahrzeugkontrollsystem 100 könnte beispielsweise einer Präsenz des Fahrzeugschlüssels 100 innerhalb des Fahrzeugs 1000 entsprechen.

In zumindest manchen Ausführungsbeispielen kann ein Fahrzeug, beispielsweise das Fahrzeug 1000, beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen.

In zumindest manchen Ausführungsbeispielen könnte das Herstellen der Funkverbindung einen Austausch von Funkverbindungsparametern umfassen. Das Kontrollmodul 26 könnte ferner ausgebildet sein, ein Funkverbindungs-Pairing für die Funkverbindung zu bestimmen. In manchen Ausführungsbeispielen könnte das Herstellen der Funkverbindung beispielsweise das Bestimmen des Funkverbindungs-Pairings umfassen.

In einigen Ausführungsbeispielen könnten die Funkverbindungsparameter beispielsweise Kanalparameter, Modulationsparameter, Frequenzparameter, Verschlüsselungsparameter, Pairing-Parameter, und Zugangsparameter umfassen.

In einigen Ausführungsbeispielen könnte das Herstellen der Funkverbindung beispielsweise zumindest ein Element der Gruppe von Senden einer Anfrage (auch engl. Inquiry), synchronisieren (auch engl. synchronization oder paging), Aufbau einer Verbindung (auch engl. link establishment), Diensterkennung (auch engl. Service Discovery), Austausch von Verschlüsselungsschlüsseln, Eintragen einer Geräteidentifikation in eine Positivliste (auch engl. Whitelist), und Verschlüsseln einer Verbindung umfassen. Das Kontrollmodul 26 könnte ferner ausgebildet sein zum Bestimmen eines Funkverbindungs-Pairings für die Funkverbindung. Das Bestimmen des Funkverbindungs-Pairings könnte beispielsweise einen Austausch von Verschlüsselungsparametern und/oder von Verschlüsselungsinformation und ein Speichern von Funkverbindungsparametern umfassen.

In zumindest manchen Ausführungsbeispielen könnte das Kontrollmodul 26 ausgebildet sein, die Funkverbindung mit einem Mobilgerät 300 herzustellen. Das Mobilgerät 300 könnte beispielsweise einem Mobiltelefon, einem erweiterbaren Mobiltelefon, einem Flachrechner (auch engl. Tablet), einem mobilen Rechner (auch engl. Laptop), einem Persönlichen Digitalen Assistenten (PDA), und/oder einer Fernsteuerung entsprechen. Das Kontrollmodul 26 könnte beispielsweise ausgebildet sein, dem Mobilgerät 300 Fahrzeugzustands- oder Schlüsselinformation über die Funkverbindung bereitzustellen. Die Fahrzeugzustandsinformation könnten beispielsweise zumindest ein Element der Gruppe von Tankfüllstand, Reichweite, Kilometerstand, Akku-Füllstand, und Navigationsinformation umfassen. Die Schlüsselinformation könnte beispielsweise einen Verschlusszustand des Fahrzeugs und/oder ein Gebrauchsprotokoll des Fahrzeugschlüssels umfassen.

Das Kontrollmodul 26 könnte in einigen Ausführungsbeispielen ausgebildet sein, die Funkverbindung mit dem Fahrzeugkontrollsystem 100 herzustellen. In zumindest manchen Ausführungsbeispielen könnte das Kontrollmodul 26 ausgebildet sein, über die Funkverbindung Schlüsselinformation dem Fahrzeugkontrollsystem 100 bereitzustellen, beispielsweise für schlüssellosen Zugang und/oder schlüsselloses Starten.

In manchen Ausführungsbeispielen könnte das Kontrollmodul 26 ausgebildet sein, Information über Geräteidentifikation auszutauschen. Die Information über die Geräteidentifikation könnte beispielsweise Geräteidentifikationsinformation des Fahrzeugschlüssels 200, Geräteidentifikationsinformation des Mobilgeräts 300 und/oder Geräteidentifikationsinformation des Fahrzeugkontrollsystems 100 umfassen. Eine Geräteidentifikationsinformation eines Geräts, beispielsweise die Geräteidentifikationsinformation des Mobilgeräts 300, des Fahrzeugkontrollsystems 100 und/oder des Fahrzeugschlüssels 200, könnte beispielsweise zumindest ein Element der Gruppe von Seriennummer des Geräts, Netzwerkkennung des Geräts, Medienzugangskontroll-Adresse (auch engl. Media Access Control, MAC) des Geräts, Bluetooth-Adresse (BD_ADDR) des Geräts, Verschlüsselungs-Schlüssel des Geräts und/oder der Funkverbindung, partieller Verschlüsselungsschlüssel des Geräts und/oder der Funkverbindung und zugewiesene Identifikation des Geräts umfassen.

In zumindest einigen Ausführungsbeispielen könnte die Information über die Geräteidentifikation Verschlüsselungsinformation umfassen. Das Kontrollmodul 26 könnte ferner ausgebildet sein, die Funkverbindung basierend auf der Verschlüsselungsinformation herzustellen und/oder zu verschlüsseln. Das Kontrollmodul 26 könnte beispielsweise ausgebildet sein, die Funkverbindung basierend auf der Verschlüsselungsinformation mittels eines Diffie-Hellman-Algorithmus aufzubauen. Die Verschlüsselung könnte beispielsweise auf einer AES-Verschlüsselung basieren. Die Verschlüsselungsinformation könnte beispielsweise zumindest ein Element der Gruppe von Verschlüsselungsschlüssel, partieller Verschlüsselungsschlüssel, symmetrischer Verschlüsselungsschlüssel, Langzeitschlüssel, Verschlüsselungsparameter und Verschlüsselungsinstruktion umfassen.

In manchen Ausführungsbeispielen könnte das Kontrollmodul 26 ferner ausgebildet sein, Information über einen Verbindungsauslöser zu erhalten. Das Kontrollmodul 26 könnte ferner ausgebildet sein, die Funkverbindung basierend auf der Information über den Verbindungsauslöser herzustellen. Die Information über den Verbindungsauslöser könnte beispielsweise auf zumindest einem Element der Gruppe von einer gedrückten Taste, einer Kombination von gedrückten Tasten, einem vorgegebenen Bewegungsprofil (z.B. durch einen Bewegungs-/Beschleunigungssensor), und einer Auswahl eines Menüpunkts in einem Informationswiedergabesystem basieren.

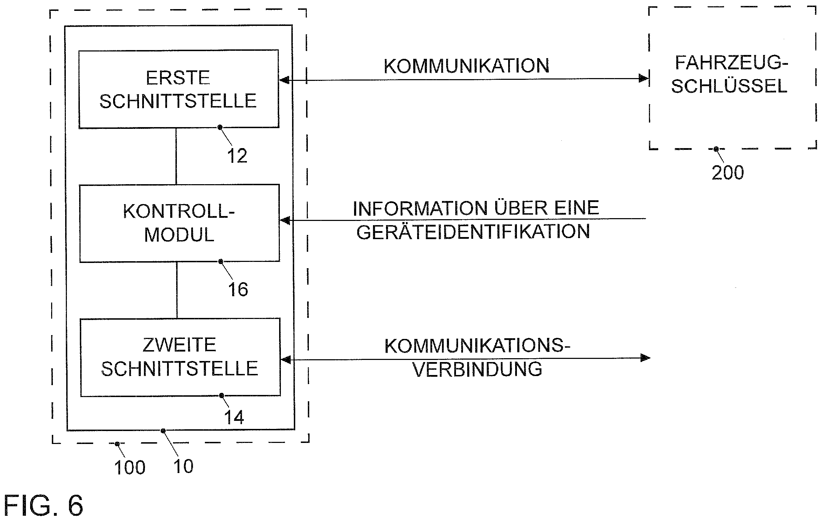

Fig. 6 illustriert ein Blockdiagramm eines Ausführungsbeispiels einer Vorrichtung 10 für ein Fahrzeugkontrollsystem 100. Die Vorrichtung 10 umfasst eine erste Schnittstelle 12, ausgebildet zur Kommunikation mit einem Fahrzeugschlüssel 200.

In Ausführungsbeispielen könnte die erste Schnittstelle 12 beispielsweise einer Schnittstelle einer Wegfahrsicherung entsprechen. Die erste Schnittstelle 12 könnte beispielsweise einer einseitigen Kommunikationsverbindung entsprechen. Die Kommunikation über die erste Schnittstelle 12 könnte beispielsweise auf einem Computerchip basieren, welche beispielsweise über ein Magnetfeld angeregt wird, beispielsweise ein Radiofrequenz-Identifikationschip (auch engl. Radio Frequency IDentification, RFID). Die Kommunikation mit dem Fahrzeugschlüssel 200 könnte beispielsweise einer drahtlosen oder einer drahtgebundenen Kommunikation entsprechen. In manchen Ausführungsbeispielen könnte die erste Schnittstelle 12 ausgebildet sein, ein Magnetfeld bereitzustellen und/oder um Information auf ein Magnetfeld aufzumodulieren. In einigen Ausführungsbeispielen könnte die erste Schnittstelle auf einer niederfrequenten Funkübertragung basieren (LF), beispielsweise in einem 125khz-Band. In manchen Ausführungsbeispielen könnte die erste Schnittstelle mehrere Sende- und/oder Empfangsmodule umfassen, wobei zumindest ein Sende- und/oder Empfangsmodul ausgebildet ist, über Bluetooth-OOB-Funkverbindungen zu kommunizieren.

Die Vorrichtung 10 umfasst eine zweite Schnittstelle 14, ausgebildet zur Kommunikation über eine Kommunikationsverbindung. Die Kommunikationsverbindung könnte beispielsweise einer drahtgebunden und/oder einer drahtlosen Kommunikationsverbindung entsprechen. In manchen Ausführungsbeispielen könnte die Kommunikationsverbindung beispielsweise einer Funkverbindung, einer Kurz-Distanz-Verbindung, einer Nahfunkverbindung oder einer kabelgebundenen Verbindung entsprechen. Die Kommunikationsverbindung könnte ferner einer virtuellen Verbindung entsprechen, beispielsweise über einen Datenstrom in einem Kommunikationsnetzwerk. Das Kommunikationsnetzwerk könnte beispielsweise einem drahtlosen Kommunikationsnetzwerk (etwa einem WLAN) oder einem drahtgebundenen Kommunikationsnetzwerk, etwa einem Lokalen Netzwerk (auch engl. Local Area Network (LAN) Kontroll-Netzwerks (auch engl. Controller Area Network, CAN) und/oder eines Lokalen Leitungs-Netzwerks (auch engl. Local Interconnect Network, LIN).

Die erste Schnittstelle 12 und/oder die zweite Schnittstelle 14 kann beispielsweise einem oder mehreren Eingängen und/oder einem oder mehreren Ausgängen zum Empfangen und/oder Übertragen von Informationen entsprechen, etwa in digitalen Bitwerten, analogen Signalen, Magnetfeldern, basierend auf einem Code, innerhalb eines Moduls, zwischen Modulen, oder zwischen Modulen verschiedener Entitäten.

Die Vorrichtung 10 umfasst ferner ein Kontrollmodul 16 ausgebildet zum Empfangen von Information über eine Geräteidentifikation über die erste Schnittstelle 12 oder die zweite Schnittstelle 14 von dem Fahrzeugschlüssel 200. Das Kontrollmodul 16 ist mit der ersten Schnittstelle 12 und mit der zweiten Schnittstelle 14 gekoppelt. Das Kontrollmodul 16 könnte beispielsweise ausgebildet sein, Geräteidentifikationsinformation des Fahrzeugschlüssels 200 über die erste Schnittstelle 12, etwa ein Wegfahrsicherungssystem, und/oder über die zweite Schnittstelle 14, etwa BTLE, zu empfangen. Das Kontrollmodul 16 könnte beispielsweise ausgebildet sein, Geräteidentifikationsinformation eines Mobilgeräts über die erste Schnittstelle 12, etwa ein Wegfahrsicherungssystem, von dem Fahrzeugschlüssel 200 zu empfangen und/oder über die zweite Schnittstelle 14, etwa BTLE, entweder direkt von dem Mobilgerät 300 oder über den Fahrzeugschlüssel 200 zu empfangen.

Das Kontrollmodul 16 ist ferner ausgebildet zum Kommunizieren über die zweite Schnittstelle 14 basierend auf der Information über die Geräteidentifikation. In zumindest manchen Ausführungsbeispielen könnte das Kommunizieren einen Austausch von Funkverbindungsparametern umfassen. In einigen Ausführungsbeispielen könnte das Kontrollmodul 16 ausgebildet sein, mit Geräten über die zweite Schnittstelle 14 zu kommunizieren, deren Geräteidentifikation bekannt ist und/oder beispielsweise in einer Positivliste eingetragen ist.

In zumindest einigen Ausführungsbeispielen könnte die Information über die Geräteidentifikation Verschlüsselungsinformation umfassen. Das Kontrollmodul 16 könnte ferner ausgebildet sein, die Funkverbindung basierend auf der Verschlüsselungsinformation herzustellen und/oder zu verschlüsseln. Das Kontrollmodul 16 könnte beispielsweise ausgebildet sein, die Funkverbindung basierend auf der Verschlüsselungsinformation mittels eines Diffie-Hellman-Algorithmus aufzubauen. Die Verschlüsselung könnte beispielsweise auf einer AES-Verschlüsselung basieren.

In manchen Ausführungsbeispielen könnte das Kontrollmodul 16 ausgebildet sein, Proximitätsinformation basierend auf einer räumlichen Nähe des Fahrzeugschlüssels 200 zum Fahrzeugkontrollsystem 100 zu bestimmen. Das Kontrollmodul 16 könnte ferner ausgebildet sein, die Proximitätsinformation dem Fahrzeugschlüssel 200 bereitzustellen. In manchen Ausführungsbeispielen könnte das Kontrollmodul 16 ausgebildet sein, eine Erzeugung eines Magnetfelds zu veranlassen, und/oder die Proximitätsinformation auf ein Magnetfeld aufzumodulieren. In manchen Ausführungsbeispielen könnte das Kontrollmodul 16 ausgebildet sein, ein starten eines Motor des Fahrzeugs 1000 zu veranlassen, wobei eine Vibration des Fahrzeugs der Proximitätsinformation entspricht. In manchen Ausführungsbeispielen könnte das Kontrollmodul 16 ausgebildet sein, ein Funksignal bereitzustellen, etwa über die erste Schnittstelle 12 und/oder die zweite Schnittstelle 14, wobei die Proximitätsinformation einer Empfangsstärke des Funksignals oder einer Sichtbarkeit des Funksignals entsprechen kann.

In einigen Ausführungsbeispielen könnte die Information über die Geräteidentifikation Geräteidentifikationsinformation des Fahrzeugschlüssels 200 umfassen. Das Kontrollmodul 16 könnte ausgebildet sein, die Kommunikationsverbindung mit dem Fahrzeugschlüssel 200 basierend auf der Geräteidentifikationsinformation des Fahrzeugschlüssels 200 herzustellen. Das Kontrollmodul 16 könnte ferner ausgebildet sein zum Bestimmen eines Funkverbindungs-Pairings für die Funkverbindung zwischen dem Fahrzeugschlüssel 200 und dem Fahrzeugkontrollsystem 100.

In manchen Ausführungsbeispielen könnte die Information über die Geräteidentifikation Geräteidentifikationsinformation eines Mobilgeräts 300 umfassen. Das Kontrollmodul 16 könnte ausgebildet sein, um die Kommunikationsverbindung mit dem Mobilgerät 300 basierend auf der Geräteidentifikationsinformation des Mobilgeräts 300 herzustellen. Das Kontrollmodul 16 könnte ferner ausgebildet zum Bestimmen eines Funkverbindungs-Pairings für die Funkverbindung zwischen dem Fahrzeugkontrollsystem 100 und dem Mobilgerät 300. In zumindest manchen Ausführungsbeispielen könnte das Kontrollmodul 16 ausgebildet sein, die Geräteidentifikationsinformation des Mobilgeräts 300 von dem Fahrzeugschlüssel 200 zu erhalten. In einigen Ausführungsbeispielen könnte das Kontrollmodul 16 ausgebildet sein, die Kommunikationsverbindung mit dem Mobilgerät 300 über den Fahrzeugschlüssel 200 herzustellen. In einigen Ausführungsbeispielen könnte das Kontrollmodul 16 ausgebildet sein, Geräteidentifikationsinformation des Fahrzeugkontrollsystems 100 dem Mobilgerät 300 über den Fahrzeugschlüssel 200 herzustellen.

Mehr Details und Aspekte der Vorrichtung 10 (z.B. Fahrzeugkontrollsystem 100, Fahrzeugschlüssel 200, Mobilgerät 300, Information über die Geräteidentifikation, Proximitätsinformation, Verschlüsselungsinformation, Funkverbindung) werden in Verbindung mit dem Konzept oder Beispielen genannt, die vorher (z.B. Fig. 1 bis 5) beschrieben wurden. Die Vorrichtung 10 kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

In einer beispielhaften Implementation könnte das Herstellen einer Funkverbindung zwischen dem Fahrzeugschlüssel 200 und dem Fahrzeugkontrollsystem 100 beispielsweise folgende Schritte umfassen. Falls der Anlern-Prozess oder Pairing-Zustand des Fahrzeugkontrollsystems 100 aktiviert ist (das Kontrollmodul 26 könnte beispielsweise ausgebildet sein, den Pairing-Zustand zu überprüfen), könnte das Kontrollmodul 26 ausgebildet sein, über die zweite Schnittstelle 24 ungerichtete Advertising-Pakete bereitzustellen, welche beispielsweise die Bluetooth-Adresse oder Geräteidentifikation umfassen könnten, bereitzustellen. In folgenden wird der Begriff Advertising (engl. für Werbung/Bewerben) dafür genutzt, ein Bewerben eines Dienstes oder eines Vorhandenseins eines Kommunikationspartners zu beschreiben. Advertising-Pakete können dabei beispielsweise Initialisierungs-Paketen entsprechen, mit dem eine Verbindungsbereitschaft eines Kommunikationspartners signalisiert werden kann. Das Fahrzeugkontrollsystem könnte nun beispielsweise, etwa über eine erste Schnittstelle (z.B. eine erste Schnittstelle 12 von Fig. 6), welche beispielsweise in einer OBU umfasst sein kann, die Geräteidentifikation erhalten, beispielsweise über eine Niedrigfrequenz- oder OOB-Verbindung. Durch die Nutzung der ersten Schnittstelle könnte beispielsweise eine Präsenz des Fahrzeugschlüssels 200 im Fahrzeug 1000 überprüft werden und eine Zuweisung des Fahrzeugschlüssels 200 zum Fahrzeug 1000 könnte erfolgen. Das Kontrollmodul 16 könnte beispielsweise ausgebildet sein, die Geräteidentifikation des Fahrzeugschlüssels der zweiten Schnittstelle 24 bereitzustellen. Das Kontrollmodul 16 könnte ausgebildet sein, über die zweite Schnittstelle 24 basierend auf der Geräteidentifikation die Funkverbindung herzustellen, etwa basierend auf der Geräteidentifikation des Fahrzeugschlüssels 200 nach dem Fahrzeugschlüssel zu suchen. Empfängt die zweite Schnittstelle 16 die Advertising-Pakets des Fahrzeugschlüssels, so könnte das Kontrollmodul 16 ausgebildet sein, die Verbindung herzustellen und/oder zu verschlüsseln, beispielsweise über einen Diffie-Hellman-Schlüsselaustausch, wonach beiden Seiten symmetrische Verschlüsselungsinformation umfassen können. Das Kontrollmodul 16 könnte alternativ ausgebildet sein, die symmetrische Verschlüsselungsinformation (etwa LTK) über die erste Schnittstelle 12 (beispielsweise über Bluetooth OOB oder einer niederfrequenten Funkverbindung und/oder mittels eine Kontroll-Netzwerks (auch engl. Controller Area Network, CAN) und/oder eines Lokalen Leitungs-Netzwerks (auch engl. Local Interconnect Network, LIN)) mit dem Fahrzeugschlüssel 200 auszutauschen. Der Fahrzeugschlüssel 200 und/oder das Fahrzeugkontrollsystem 100 könnten die Verschlüsselungsinformation beispielsweise vorhalten für weitere Kommunikation. Zum Herstellen weiterer Funkverbindungen könnten die Schritte beispielsweise wiederholt werden.

In zumindest manchen Ausführungsbeispielen könnte das Fahrzeugkontrollsystem 100 ausgebildet sein, alle Fahrzeugschlüssel auf einmal zu (re)autorisieren, beispielsweise um eine Sicherheit zu erhöhen, beispielsweise bei einer Stilllegung des Fahrzeugs, einem Weiterverkauf oder einem Austausch des Fahrzeugkontrollsystems 100 in einer Werkstatt. Das ausgetauschte Fahrzeugkontrollsystem könnte beispielsweise die Fähigkeit verlieren, mit vormals gepairten Fahrzeugschlüsseln zu kommunizieren.

Eine drahtgebundene Kommunikation zwischen einer OBU und dem Fahrzeugkontrollsystem 100 oder innerhalb von Modulen des Fahrzeugkontrollsystems 100 könnte beispielsweise verschlüsselt werden. Ausführungsbeispiele könnten beispielsweise eine Vertraulichkeit der Funkverbindung unterstützen.

In zumindest manchen Ausführungsbeispielen könnte der Fahrzeugschlüssel 200 eine symmetrische Verschlüsselungsinformation (etwa den LTK) vorhalten für die Funkverbindung mit dem Fahrzeugkontrollsystem 100. Das Kontrollmodul 16 könnte mehrere symmetrische Verschlüsselungsinformationen vorhalten für die Funkverbindungen mit zwei oder mehr Fahrzeugschlüsseln, welche für das Fahrzeug 1000 autorisiert sind.

Fig. 7 illustriert ein Blockdiagramm eines Ausführungsbeispiels einer Vorrichtung 30 für ein Mobilgerät 300. Die Vorrichtung 30 umfasst eine Schnittstelle 32, ausgebildet zur Kommunikation über eine Funkverbindung.

Die Schnittstelle 32 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten.

Die Vorrichtung 30 umfasst ein Kontrollmodul 34, ausgebildet zum Herstellen einer Funkverbindung mit einem Fahrzeugschlüssel 200 über die Schnittstelle 32. Das Kontrollmodul 34 ist ferner ausgebildet zum Bestimmen eines Funkverbindungs-Pairings für die Funkverbindung zwischen dem Fahrzeugschlüssel 200 und dem Mobilgerät 300. Das Kontrollmodul 34 ist mit der Schnittstelle 32 gekoppelt.

In manchen Ausführungsbeispielen könnte das Kontrollmodul 34 ferner ausgebildet sein, Information über eine Geräteidentifikation mit dem Fahrzeugschlüssel 200 über die Funkverbindung auszutauschen. In manchen Ausführungsbeispielen könnte die Information über die Geräteidentifikation Geräteidentifikationsinformation eines Fahrzeugkontrollsystems 100, Geräteidentifikationsinformation des Fahrzeugschlüssels 200 und/oder Geräteidentifikationsinformation des Mobilgeräts (300) umfassen. Das Kontrollmodul 34 könnte ausgebildet sein, eine weitere Funkverbindung mit einem Fahrzeugkontrollsystem 100 basierend auf der Information über die Geräteidentifikation herzustellen.

In zumindest einigen Ausführungsbeispielen könnte die Information über die Geräteidentifikation Verschlüsselungsinformation umfassen. Das Kontrollmodul 34 könnte ferner ausgebildet sein, die Funkverbindung basierend auf der Verschlüsselungsinformation herzustellen und/oder zu verschlüsseln. Das Kontrollmodul 34 könnte beispielsweise ausgebildet sein, die Funkverbindung basierend auf der Verschlüsselungsinformation mittels eines Diffie-Hellman-Algorithmus aufzubauen. Die Verschlüsselung könnte beispielsweise auf einer AES-Verschlüsselung basieren.

In zumindest manchen Ausführungsbeispielen könnte das Herstellen der Funkverbindung einem Pairing entsprechen. In einigen Ausführungsbeispielen könnte das Herstellen der Funkverbindung einen Austausch von Advertising-Paketen und/oder Verbindungsaufbaupaketen umfassen.

Die Funkverbindung könnte in manchen Ausführungsbeispielen einer Bluetoothverbindung, einer Kurz-Distanz-Verbindung, einer Near-Field-Communication-Verbindung, NFC, oder einer Nahfunkverbindung entsprechen.

Mehr Details und Aspekte der Vorrichtung 30 (z.B. Fahrzeugkontrollsystem 100, Fahrzeugschlüssel 200, Information über die Geräteidentifikation, Verschlüsselungsinformation, Mobilgerät 300, Funkverbindung, Kommunikation, Herstellen einer Funkverbindung) werden in Verbindung mit dem Konzept oder Beispielen genannt, die vorher (z.B. Fig. 1 bis 6) beschrieben wurden. Die Vorrichtung 30 kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

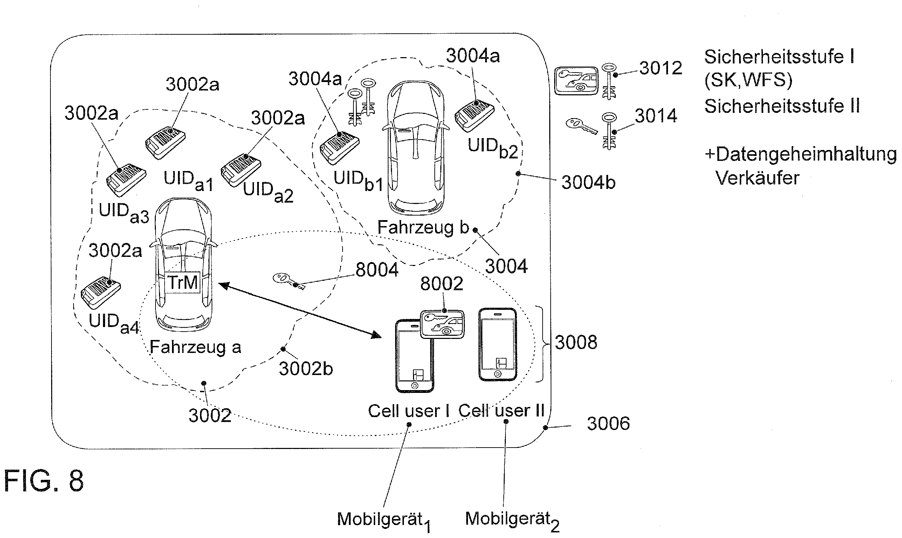

Fig. 8 zeigt eine weitere Übersicht eines beispielhaften Fahrzeugsicherheitskontexts von zwei Fahrzeugen a 3002 und b 3004. Fahrzeug a 3002 umfasst in seinem Fahrzeugsicherheitskontext 3002b Fahrzeugschlüssel (UID) a1 bis a4 3002a. Fahrzeug b 3004 umfasst in seinem Fahrzeugsicherheitskontext 3004b Fahrzeugschlüssel (UID) b1 und b2 3004a. Die beiden Fahrzeugsicherheitskontexte 3002b und 3004b sind in einem automobilen Kontext 3006 (auch engl. automotive context) umfasst. Fig. 8 zeigt zusätzlich zu den Elementen von Fig. 3 die zwei Mobilgeräte 3008 innerhalb des automobilen Kontexts 3006. Die zwei Mobilgeräte haben in diesem Ausführungsbeispielen Zugriff auf das Fahrzeug innerhalb der ersten Sicherheitsstufe 3012, beispielsweise basierend auf einem geheimen Schlüssel (auch engl. Secret Key, SK) und/oder einer WegFahrSicherung (WFS) und eine geschützte Verbindung zu einem oder beiden der Fahrzeuge innerhalb der zweiten Sicherheitsstufe 3014, beispielsweise basierend auf einem Langzeitschlüssel (auch engl. LongTerm Key, LTK) und/oder basierend auf einer Kurzstreckenfunkverbindung oder einer Nahfunkverbindung, beispielsweise basierend auf Bluetooth Low Energy (Niedrigenergie-Bluetooth, BTLE oder LE). Der geheime Schlüssel könnte in einigen Ausführungsbeispielen über eine besonders gesicherte Kommunikationsverbindung zwischen Kommunikationspartnern übertragen werden.

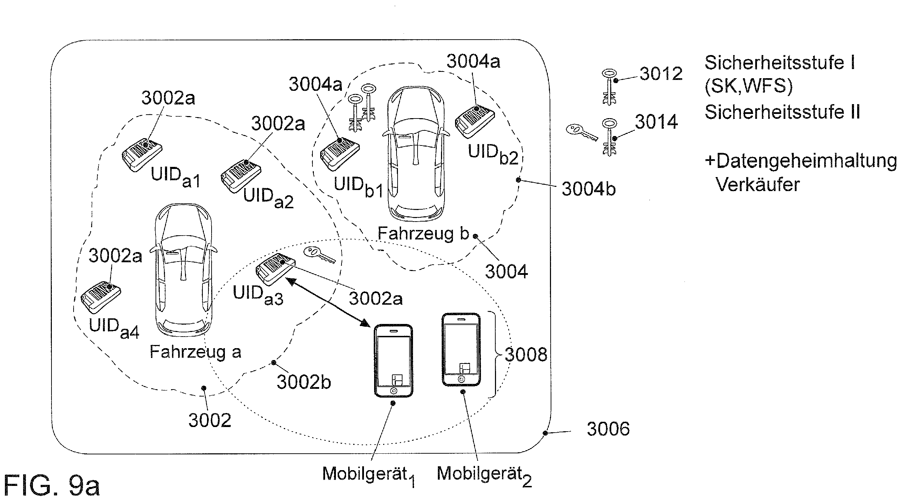

Fig. 9a zeigt eine weitere Übersicht eines beispielhaften Fahrzeugsicherheitskontexts von zwei Fahrzeugen a 3002 und b 3004. Fahrzeug a 3002 umfasst in seinem Fahrzeugsicherheitskontext 3002b Fahrzeugschlüssel (UID) a1 bis a4 3002a. Fahrzeug b 3004 umfasst in seinem Fahrzeugsicherheitskontext 3004b Fahrzeugschlüssel (UID) b1 und b2 3004a. Die beiden Fahrzeugsicherheitskontexte 3002b und 3004b sind in einem automobilen Kontext 3006 (auch engl. automotive context) umfasst. Fig. 8 zeigt zusätzlich zu den Elementen von Fig. 3 die zwei Mobilgeräte 3008 innerhalb des automobilen Kontexts 3006. Die Mobilgeräte 3008 verfügen über eine geschützte Verbindung zu zumindest einem Fahrzeugschlüssel, beispielsweise einem Fahrzeugschlüssel 3002a, innerhalb der zweiten Sicherheitsstufe 3014, beispielsweise basierend auf einem Langzeitschlüssel (auch engl. LongTerm Key, LTK) und/oder basierend auf einer Kurzstreckenfunkverbindung oder einer Nahfunkverbindung, beispielsweise basierend auf Bluetooth Low Energy (Niedrigenergie-Bluetooth, BTLE oder LE).

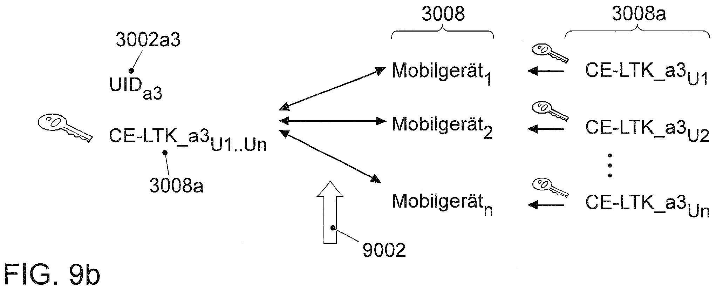

Fig. 9b zeigt eine Übersicht einer Bindung 9002 eines Fahrzeugschlüssels (UID) 3002a3 an die *n* Mobilgeräte 3008. Die Bindung 9002 könnte beispielsweise auf *n* Langzeitschlüsseln CE-LTK (CEII phone LongTerm Key, Langzeitschlüssel eines Mobiltelefons) 3008a basieren, wobei die Langzeitschlüssel 3008a beispielsweise symmetrischen Verschlüsselungsschlüsseln entsprechen könnten. Die Bindung könnte beispielsweise an einem beliebigen Ort, zu einer beliebigen Zeit, und/oder von einer beliebigen Person durchgeführt werden, der den Fahrzeugschlüssel 3002a3 und das Fahrzeug 3002 besitzt. In manchen Ausführungsbeispielen könnte der Fahrzeugschlüssel 3002a3 ausgebildet sein, verschlüsselt mit den Mobilgeräten 3008 zu kommunizieren. Der Fahrzeugschlüssel 3002a3 könnte beispielsweise ausgebildet sein, einem Benutzer Information über einen Pairing-Status des Fahrzeugschlüssels 3002a3 bereitzustellen, welche beispielsweise aktive Pairings des Fahrzeugschlüssels 3002a3 umfassen könnte. In Ausführungsbeispielen könnte der Fahrzeugschlüssel ausgebildet sein, vorhandene Pairings des Fahrzeugschlüssels zu löschen, beispielsweise über eines der n Mobilgeräte 3008, beispielsweise ohne einen Server 4002 des Fahrzeugherstellers zu involvieren. In manchen Ausführungsbeispielen könnte ein Pairing des Fahrzeugschlüssels 3002a3 nur innerhalb einer definierten Umgebung erlaubt sein, etwa innerhalb des Fahrzeugs 3002.

In einem beispielhaften Ausführungsbeispiel könnte ein Nutzer, welcher ein Fahrzeug erworben hat, sein Mobilgerät (etwa das Mobilgerät 300) mit einem Fahrzeugschlüssel des Fahrzeugs koppeln. Dazu könnte er beispielsweise eine mobile Anwendung auf seinem Mobilgerät installieren und in dieser mobilen Anwendung das Fahrzeug hinzufügen. Dabei könnte die mobile Anwendung beispielsweise darauf hinweisen, dass für ein Pairing des Fahrzeugschlüssels (etwa des Fahrzeugschlüssels 200) mit dem Mobilgerät der Fahrzeugschlüssel und eine Anwesenheit des Fahrzeugschlüssels im Fahrzeug eine Voraussetzung sein könnte. In manchen Ausführungsbeispielen könnte ein Pairing des Mobilgeräts auch mit einem Fahrzeugkontrollsystem (etwa dem Fahrzeugkontrollsystem 100) des Fahrzeugs geschehen, und das Fahrzeugkontrollsystem könnte die Pairings an die Fahrzeugschlüssel weitergeben.

Zum Pairing könnte das Mobilgerät beispielsweise über die Schnittstelle 32 nach Advertising-Paketen aus unbekannten Quellen horchen. Diese Advertising-Pakete könnten beispielsweise Erkennungsdaten des Fahrzeugherstellers umfassen. Um den Fahrzeugschlüssel in einen Pairing-Zustand zu versetzen könnte der Benutzer beispielsweise eine vordefinierte Reihenfolge von Tasten des Fahrzeugschlüssels drücken, etwa um die Information über den Verbindungsauslöser zu erzeugen, oder der Benutzer könnte eine Pairing-Taste im Fahrzeug auslösen (etwa auch innerhalb eines Informationswiedergabesystems). Beispielsweise könnte der Fahrzeugschlüssel auch eine Anwesenheit im Fahrzeug durch Starten des Fahrzeugs nachprüfen.

Alternativ oder zusätzlich könnte das Fahrzeugkontrollsystem eine Proximitätsinformation bereitstellen, wobei beispielsweise ein Interrupt im Fahrzeugschlüssel durch die Proximitätsinformation ausgelöst werden könnte um zu bestätigen, dass sich der Fahrzeugschlüssel im Fahrzeug befindet. Oder das Fahrzeugkontrollsystem könnte eine Funkverbindung mit dem Fahrzeugschlüssel herstellen und überprüfen, dass der Fahrzeugschlüssel sich innerhalb des Fahrzeugs befindet. Der Fahrzeugschlüssel könnte den Pairing-Zustand eine vordefinierte Zeit beibehalten, beispielsweise 10 Minuten. Im Pairing-zustand könnte der Fahrzeugschlüssel ein ungerichtetes Advertising-Paket verschicken (beispielsweise über die zweite Schnittstelle 24), welche das Mobilgerät empfangen könnte und daraufhin eine Verbindungsanfrage stellen würde, nach welcher der Fahrzeugschlüssel und das Mobilgerät gepairt sein könnten.

In manchen Ausführungsbeispielen könnte der Benutzer den Fahrzeugschlüssel sehr nah an das Mobilgerät halten (etwa auch berühren) um sicherzustellen, dass das Mobilgerät mit dem richtigen Schlüssel gepairt wird (falls ein weiteres Fahrzeug mit einem Fahrzeugschlüssel im Pairing-Zustand in der Nähe ist). Alternativ oder zusätzlich könnte die mobile Anwendung der Benutzer auffordern, eine vorgegebene Aktion zeitlich eingeschränkt auf dem Fahrzeugschlüssel auszuführen als Voraussetzung für das Pairing. Nach dem Pairing könnte das Mobilgerät die Verbindung trennen und nach weiteren Fahrzeugschlüsseln zum Pairing Ausschau halten. Um die Sicherheit zu steigern könnte ein Pairing auf einem Diffie-Hellman-Schlüsselaustausch basieren und/oder außerhalb der Öffentlichkeit stattfinden. Die mobile Anwendung könnte dem Benutzer nach dem Pairing beispielsweise eine Übersicht der Pairings anzeigen (beispielsweise der Pairings des Mobilgeräts und/oder der Pairings des Fahrzeugschlüssels) und ermöglichen, die Pairings zu lösen.

In zumindest manchen Ausführungsbeispielen könnte der Pairing-Prozess unabhängig von einem Server des Fahrzeugherstellers stattfinden. Zur Erhöhung der Sicherheit könnte es eine Obergrenze für gleichzeitige Pairings des Fahrzeugschlüssels geben. Ein Mobilgerät könnte beispielsweise mit mehr als einem Fahrzeugschlüssel gepairt sein, und/oder ein Fahrzeugschlüssel könnte mit mehreren Mobilgeräten gepairt sein. Die Verschlüsselungsinformation könnte beispielsweise auf dem Mobilgerät gespeichert werden, beispielsweise unter Nutzung von Sicherheitsmaßnahmen des Mobilgeräteherstellers. In manchen Ausführungsbeispielen könnte der Pairing-Prozess vom Benutzer des Fahrzeugs angestoßen werden.

In einer beispielhaften Implementierung könnte der Fahrzeugschlüssel 200 in der Fertigung beim Fahrzeughersteller ans Fahrzeug angelernt werden. Dabei könnte in Ausführungsbeispielen automatisch sichergestellt sein, dass das fahrzeugseitig vernetzte Fahrzeugkontrollsystem 100 und der portable Fahrzeugschlüssel (UID) (bzw. die portablen UIDs) sich kennen. In einer Fertigungshalle könnten mehrere Fahrzeuge eng zusammenstehen. Ausführungsbeispiele könnten eine Verwechselung mit UIDs eines benachbarten Autos vermeiden. In Ausführungsbeispielen könnte der Begriff "sich kennen" oder im folgenden auch "kennenlernen" oder "bekannt" genutzt werden, um die zwei unterschiedlichen Stufen ausreichend präzise zu berücksichtigen, die es hierbei zu berücksichtigen bzw. zu differenzieren gibt:
Stufe 1 - "Positivliste":
1a) das Fahrzeugkontrollsystem 100 könnte seine <BT Geräteadresse (BD_ADDR)> (gemäß Bluetooth-Spezifikation Vol.6, 1.3) dem UID mitteilen und
1b) der UID könnte seine <BT Geräteadresse > dem Fahrzeugkontrollsystem 100 mitteilen

Genaugenommen könnte allgemeiner formuliert die Bluetooth Geräteadresse gegenseitig bekannt sein. Dabei sind mehrere Kanäle und Zeitpunkte denkbar.

Wenn das Fahrzeugkontrollsystem 100 Kenntnis über die Geräteadresse des UID hat, dann kann das Fahrzeugkontrollsystem 100 diese in seine Positivliste eintragen, so dass dann beim Ankündigen nur noch Advertising-Paket der zugehörigen (bekannten) UIDs im Fahrzeugkontrollsystem 100 gehört werden könnten.

Der Fahrzeugschlüssel könnte in Ausführungsbeispielen möglicherweise ein gerichtetes Advertising-Paket zum Fahrzeugkontrollsystem 100 übertragen. Dazu könnte gemäß Spezifikation die Geräteadresse des Werbers bzw. Sklaven (also des UIDs) und die Geräteadresse des Initiators bzw. Meisters (also des Fahrzeugkontrollsystem 100) in die Advertising-Pakete zu legen (BT-Spezifikation. 2.3.1.2., Band 6).

Alternativ zu gerichteten Advertising-Paketen gibt es auch die Möglichkeit der ungerichteten Advertising-Pakete, bei dem ein Kommunikationspartner seine eigene Adresse mit ins Advertising-Paket schreibt.

### Stufe 2 - "Pairing".

Beim Pairing gibt es hierzu verschiedene Verfahren, beispielsweise könnten BT-basierte zusammengehörende geheime Schlüssel auf beiden Seiten festgelegt werden, so dass danach auch eine verschlüsselte Kommunikation innerhalb von BTLE möglich ist. Wenn die Geräte gegenseitig ihre Geräteadressen kennen, kann das in einem "Kennenlernprozess" dann jederzeit stattfinden.

Wie in Stufe 1 dargestellt könnten Ausführungsbeispiele dafür sorgen, dass die Geräteadresse der Gesprächspartner gegenseitig bekannt ist. In manchen Ausführungsbeispielen könnte die UID (etwa der Fahrzeugschlüssel 200) seine Geräteidentifikation an das Fahrzeug, bzw. das Fahrzeugkontrollsystem 100 übertragen. Diese Geräteidentifikation könnte beispielsweise der BT-Geräteadresse entsprechen, welche durchnummeriert und eindeutig sein könnte. Die Geräteidentifikation bzw. die BT-Geräteadresse könnte beispielsweise nicht geheim sein und über ein Bussystem an das Fahrzeugkontrollsystem 100 weiteregegeben werden. Die Geräteidentifikation könnte beispielsweise über die ersten Schnittstellen 22/12 übertragen werden, womit in manchen Ausführungsbeispielen bestätigt werden könnte, dass diese Geräteidentifikation von einem UID stammt, der sich innerhalb des jeweiligen Fahrzeugs befindet.

Im Anschluss könnte der UID ein ungerichtetes Advertising-Paket schicken (s.o.) und das Fahrzeugkontrollsystem 100 könnte auf die Geräteadresse des Fahrzeugschlüssels 200 hören (UIDs in Nachbarfahrzeugen könnten basierend auf der OOB manipulierte Positivliste ignoriert werden). Das Fahrzeugkontrollsystem 100 könnte einen Verbindungsaufbau durchführen und könnte dem Fahrzeugschlüssel 200 seine eigene Geräteadresse schicken. Dadurch könnte der UID nun in die Lage versetzt werden, ab jetzt auch gerichtete Advertising-Pakete zu verschicken. Optional könnte die Geräteadresse in einer anderen Bitsequenz, die vom Fahrzeugkontrollsystem 100 zum Fahrzeugschlüssel 200 (OOB) übertragen wird dafür zu nutzen, die Geräteadresse vom Fahrzeugkontrollsystem 100 reinzulegen (z.B. ggfls. in einem Aufweckpaket); dann wäre direkt ein gerichtetes Advertising-Paket möglich.

In manchen Ausführungsbeispielen könnte die Kommunikation zwischen UID und Fahrzeugkontrollsystem 100 verschlüsselt sein, dann könnte beispielsweise ein Verschlüsselungs-Pairing durchgeführt werden. Da die Geräteadresse gegenseitig bekannt ist, könnte diese unabhängig von der ersten Schnittstelle 22/12 erfolgen.

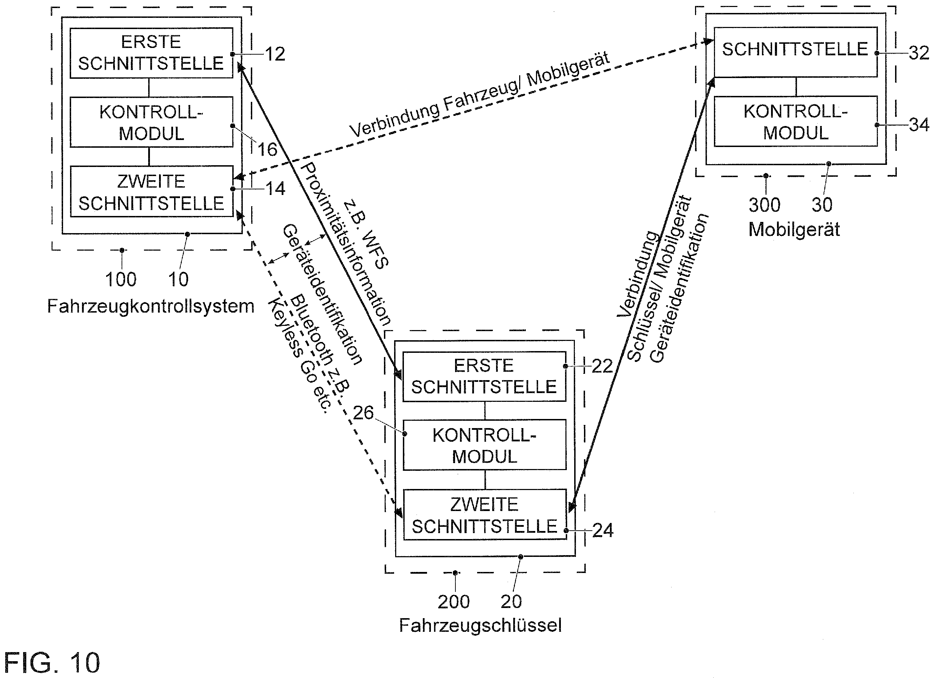

Fig. 10 zeigt einen beispielhaften Zusammenhang der Komponenten Fahrzeugkontrollsystem 100, Fahrzeugschlüssel 200 und Mobilgerät 300. Das Fahrzeugkontrollsystem 100 umfasst die Vorrichtung 10, welche die erste Schnittstelle 12, die zweite Schnittstelle 14 und das Kontrollmodul 16 umfasst. Das Kontrollmodul 16 ist mit der ersten Schnittstelle 12 und mit der zweiten Schnittstelle 14 gekoppelt. Der Fahrzeugschlüssel 200 umfasst die Vorrichtung 20, welche die erste Schnittstelle 22, die zweite Schnittstelle 24 und das Kontrollmodul 26 umfasst. Das Kontrollmodul 26 ist mit der ersten Schnittstelle 22 und der zweiten Schnittstelle 24 gekoppelt. Das Mobilgerät 300 umfasst die Vorrichtung 30, welche die Schnittstelle 32 und das Kontrollmodul 34 umfasst, welches mit der Schnittstelle 32 gekoppelt ist.

In zumindest manchen Ausführungsbeispielen ist das Fahrzeugkontrollsystem 100 ausgebildet, über die erste Schnittstelle 12 Proximitätsinformation der ersten Schnittstelle 22 des Fahrzeugschlüssels 200 bereitzustellen. Das Kontrollmodul 16 kann beispielsweise ausgebildet sein, eine Funkverbindung, beispielsweise über Bluetooth, zwischen der zweiten Schnittstelle 14 und der zweiten Schnittstelle 24 des Fahrzeugschlüssels 200 aufzubauen, beispielsweise für Keyless Entry und/oder Keyless Go-Systeme. Das Fahrzeugkontrollsystem 100 ist ausgebildet, über die erste Schnittstelle 12 und/oder über die zweite Schnittstelle 14 Geräteidentifikationsinformation des Fahrzeugschlüssels 200 und/oder Geräteidentifikationsinformation des Mobilgeräts 300 zu erhalten, um die Funkverbindung zu dem Fahrzeugschlüssel 200 und/oder dem Mobilgerät 300 herzustellen. Dabei kann der Fahrzeugschlüssel 100 ausgebildet sein, die Geräteidentifikationsinformation des Mobilgeräts 300 von dem Fahrzeugschlüssel 200 zu erhalten. Über die Funk- und Kommunikationsverbindungen können weiter Verschlüsselungsinformationen übertragen werden, um die Kommunikationsverbindungen zu verschlüsseln. Das Kontrollmodul 26 des Fahrzeugschlüssels 26 kann beispielsweise ausgebildet sein, Funkverbindungen mit dem Fahrzeugkontrollsystem 100 und/oder dem Mobilgerät 300 herzustellen, beispielsweise basierend auf der Geräteidentifikationsinformation des Fahrzeugkontrollsystems 100 oder der Geräteidentifikationsinformation des Mobilgeräts 300, welche der Fahrzeugschlüssel über die erste 22 und/oder die zweite Schnittstelle 24 erhalten könnte. Das Kontrollmodul 34 kann ausgebildet sein, eine Funkverbindung mit dem Fahrzeugschlüssel 200 herzustellen, beispielsweise basierend auf der Geräteidentifikationsinformation des Fahrzeugschlüssels. Das Kontrollmodul 34 kann ferner ausgebildet sein, eine weitere Funkverbindung mit dem Fahrzeugkontrollsystem 100 herzustellen, beispielsweise basierend auf der Geräteidentifikationsinformation des Fahrzeugkontrollsystems 100. Die Geräteidentifikationsinformation des Fahrzeugkontrollsystems 100 könnte das Kontrollmodul 34 beispielsweise von dem Fahrzeugschlüssel 200 erhalten.

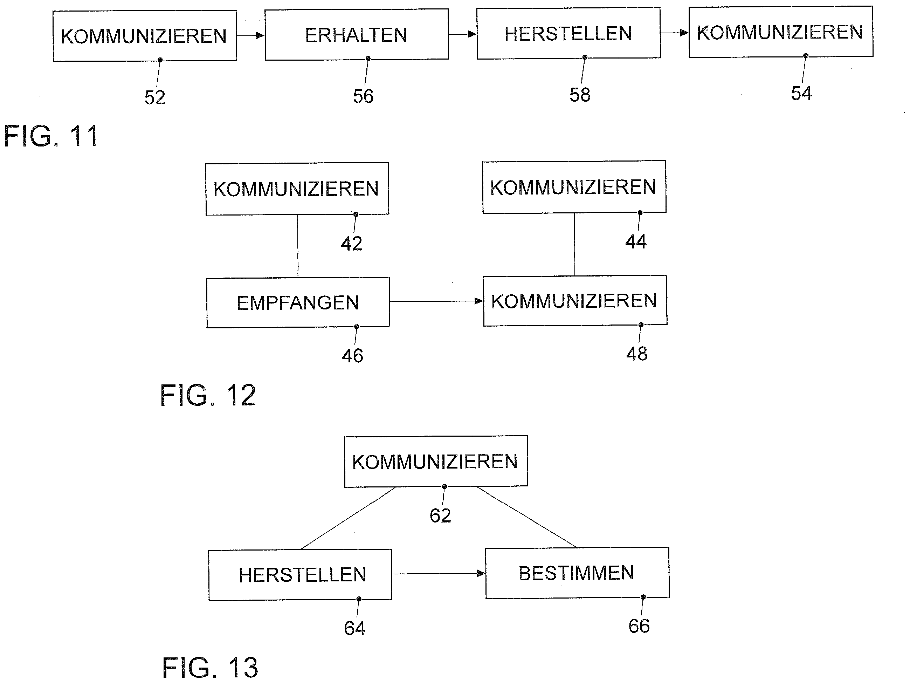

Fig. 11 zeigt ein Flussdiagramm eines Verfahrens für einen Fahrzeugschlüssel 200. Das Verfahren umfasst Kommunizieren 52 mit einem Fahrzeugkontrollsystem 100 über eine erste Schnittstelle 22. Das Verfahren umfasst ferner Kommunizieren 54 über eine Funkverbindung über eine zweite Schnittstelle 24. Das Verfahren umfasst ferner Erhalten 56 von Proximitätsinformation von dem Fahrzeugkontrollsystem 100. Das Verfahren umfasst ferner Herstellen 58 einer Funkverbindung über die zweite Schnittstelle 24 falls die Proximitätsinformation auf eine räumliche Nähe des Fahrzeugschlüssels 200 zum Fahrzeugkontrollsystem 100 hindeutet.

Fig. 12 zeigt ein Flussdiagramm eines Verfahrens für ein Fahrzeugkontrollsystem 100. Das Verfahren umfasst Kommunizieren 42 mit einem Fahrzeugschlüssel 200 über eine erste Schnittstelle 12. Das Verfahren umfasst ferner Kommunizieren 44 über eine Kommunikationsverbindung über eine zweite Schnittstelle 14. Das Verfahren umfasst ferner Empfangen 46 von Information über eine Geräteidentifikation über die erste Schnittstelle 12 oder die zweite Schnittstelle 14 von dem Fahrzeugschlüssel 200. Das Verfahren umfasst ferner Kommunizieren 48 über die zweite Schnittstelle 14 basierend auf der Information über die Geräteidentifikation.

Fig. 13 zeigt ein Flussdiagramm eines Verfahrens für ein Mobilgerät 300. Das Verfahren umfasst Kommunizieren 62 über eine Funkverbindung. Das Verfahren umfasst ferner Herstellen 64 einer Funkverbindung mit einem Fahrzeugschlüssel 200. Das Verfahren umfasst ferner Bestimmen 66 eines Funkverbindungs-Pairing für die Funkverbindung zwischen dem Fahrzeugschlüssel 200 und dem Mobilgerät 300.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

### Bezugszeichenliste

- 10: Vorrichtung
- 12: Erste Schnittstelle
- 14: Zweite Schnittstelle
- 16: Kontrollmodul
- 20: Vorrichtung
- 22: Erste Schnittstelle
- 24: Zweite Schnittstelle
- 26: Kontrollmodul
- 30: Vorrichtung
- 32: Schnittstelle
- 34: Kontrollmodul
- 42: Kommunizieren
- 44: Kommunizieren
- 46: Empfangen
- 48: Kommunizieren
- 52: Kommunizieren
- 54: Kommunizieren
- 56: Erhalten
- 58: Herstellen
- 62: Kommunizieren
- 64: Herstellen
- 66: Bestimmen
- 100: Fahrzeugkontrollsystem
- 200: Fahrzeugschlüssel
- 300: Mobilgerät
- 1000: Fahrzeug
- 2000: Fahrzeug
- 2002: Konventioneller Fahrzeugsicherheitskontext
- 2002a: Fahrzeugschlüssel
- 2004: Erweiterter Fahrzeugsicherheitskontext
- 2004a: Fahrzeugschlüssel
- 2004b: Mobilgerät
- 2004c: Basisstation
- 2006: Erweitertes Sicherheitskonzept
- 2006a: Fahrzeugschlüssel
- 2006b: Mobilgerät
- 2006c: Basisstation
- 2006d: Servermodul
- 2006e: Weitere Basisstation
- 2008: Intelligente Uhr
- 3002: Fahrzeug a
- 3002a: Fahrzeugschlüssel
- 3002a2: Fahrzeugschlüssel
- 3002a3: Fahrzeugschlüssel
- 3002b: Fahrzeugsicherheitskontext
- 3004: Fahrzeug b
- 3004a: Fahrzeugschlüssel
- 3004b: Fahrzeugsicherheitskontext
- 3006: Automobiler Kontext
- 3008: Mobilgeräte
- 3010: Mobilgeräte
- 3012: Erste Sicherheitsstufe
- 3014: Zweite Sicherheitsstufe
- 4002: Server
- 4004: Wegfahrsicherungssystem
- 5002: Fahrzeugschlüssel
- 5004: TrM
- 5006: Server
- 9002: Bindung

## Patentansprüche

1. Vorrichtung (20) für einen Fahrzeugschlüssel (200), die Vorrichtung (20) umfassend
eine erste Schnittstelle (22), ausgebildet zur Kommunikation mit einem Fahrzeugkontrollsystem (100),
eine zweite Schnittstelle (24), ausgebildet zur Kommunikation über eine Funkverbindung,
ein Kontrollmodul (26), ausgebildet zum:
Erhalten von Proximitätsinformation von dem Fahrzeugkontrollsystem (100) über die erste Schnittstelle (22),
Herstellen einer Funkverbindung über die zweite Schnittstelle (24) falls die Proximitätsinformation auf eine räumliche Nähe des Fahrzeugschlüssels (200) zum Fahrzeugkontrollsystem (100) hindeutet,
wobei ein Fahrzeug (1000) das Fahrzeugkontrollsystem (100) umfasst, und wobei die räumliche Nähe des Fahrzeugschlüssels (200) zum Fahrzeugkontrollsystem (100) einer Präsenz des Fahrzeugschlüssels (100) innerhalb des Fahrzeugs (1000) entspricht.

2. Vorrichtung (20) gemäß Anspruch 1, wobei das Herstellen der Funkverbindung den Austausch von Funkverbindungsparametern umfasst, und wobei das Kontrollmodul (26) ferner ausgebildet ist, ein Funkverbindungs-Pairing für die Funkverbindung zu bestimmen.

3. Vorrichtung (20) gemäß Anspruch 1, wobei das Kontrollmodul (26) ausgebildet ist, die Funkverbindung mit einem Mobilgerät (300) herzustellen,
und/oder wobei das Kontrollmodul (26) ausgebildet ist, die Funkverbindung mit dem Fahrzeugkontrollsystem (100) herzustellen.

4. Vorrichtung (20) gemäß Anspruch 3, wobei das Kontrollmodul (26) ausgebildet ist, Information über Geräteidentifikation auszutauschen, und wobei die Information über die Geräteidentifikation Geräteidentifikationsinformation des Fahrzeugschlüssels (200), Geräteidentifikationsinformation des Mobilgeräts (300) und/oder Geräteidentifikationsinformation des Fahrzeugkontrollsystems (100) umfasst.

5. Vorrichtung (20) gemäß Anspruch 1, wobei das Kontrollmodul (26) ferner ausgebildet ist, Information über einen Verbindungsauslöser zu erhalten, und wobei das Kontrollmodul (26) ferner ausgebildet ist, die Funkverbindung basierend auf der Information über den Verbindungsauslöser herzustellen,
und/oder wobei die Funkverbindung einer Bluetooth-Verbindung, einer Kurz-Distanz-Verbindung, einer Near-Field-Communication-Verbindung, NFC, oder einer Nahfunkverbindung entspricht.

6. Vorrichtung (10) für ein Fahrzeugkontrollsystem (100), die Vorrichtung (10) umfassend
eine erste Schnittstelle (12), ausgebildet zur Kommunikation mit einem Fahrzeugschlüssel (200),
eine zweite Schnittstelle (14), ausgebildet zur Kommunikation über eine Kommunikationsverbindung,
ein Kontrollmodul (16), ausgebildet zum:
Empfangen von Information über eine Geräteidentifikation über die erste Schnittstelle (12) oder die zweite Schnittstelle (14) von dem Fahrzeugschlüssel (200), Bestimmen von Proximitätsinformation basierend auf einer räumlichen Nähe des Fahrzeugschlüssels (200) zum Fahrzeugkontrollsystem (100), und
Kommunizieren über die zweite Schnittstelle (14) basierend auf der Information über die Geräteidentifikation, falls die Proximitätsinformation auf eine räumliche Nähe des Fahrzeugschlüssels (200) zum Fahrzeugkontrollsystem (100) hindeutet,
wobei ein Fahrzeug (1000) das Fahrzeugkontrollsystem (100) umfasst, und wobei die räumliche Nähe des Fahrzeugschlüssels (200) zum Fahrzeugkontrollsystem (100) einer Präsenz des Fahrzeugschlüssels (100) innerhalb des Fahrzeugs (1000) entspricht.

7. Vorrichtung (10) gemäß Anspruch 6, wobei das Kontrollmodul (16) ausgebildet ist, Proximitätsinformation basierend auf einer räumlichen Nähe des Fahrzeugschlüssels (200) zum Fahrzeugkontrollsystem (100) zu bestimmen, und wobei das Kontrollmodul (16) ferner ausgebildet ist, die Proximitätsinformation dem Fahrzeugschlüssel (200) bereitzustellen.

8. Vorrichtung (10) gemäß Anspruch 6, wobei die Information über die Geräteidentifikation Geräteidentifikationsinformation des Fahrzeugschlüssels (200) umfasst und wobei das Kontrollmodul (16) ausgebildet ist, die Kommunikationsverbindung mit dem Fahrzeugschlüssel (200) basierend auf der Geräteidentifikationsinformation des Fahrzeugschlüssels (200) herzustellen,
und/oder wobei die Information über die Geräteidentifikation Geräteidentifikationsinformation eines Mobilgeräts (300) umfasst und wobei das Kontrollmodul (16) ausgebildet ist, die Kommunikationsverbindung mit dem Mobilgerät (300) basierend auf der Geräteidentifikationsinformation des Mobilgeräts (300) herzustellen.

9. Vorrichtung (10) gemäß Anspruch 6, wobei die Information über die Geräteidentifikation Verschlüsselungsinformation umfasst, und wobei das Kontrollmodul (16) ferner ausgebildet ist, die Kommunikationsverbindung basierend auf der Verschlüsselungsinformation herzustellen und/oder zu verschlüsseln.

10. Vorrichtung (10) gemäß Anspruch 6, wobei die Kommunikationsverbindung einer Funkverbindung, einer Kurz-Distanz-Verbindung, einer Nahfunkverbindung oder einer kabelgebundenen Verbindung entspricht.

11. Vorrichtung (30) für ein Mobilgerät (300), die Vorrichtung (30) umfassend
eine Schnittstelle (32), ausgebildet zur Kommunikation über eine Funkverbindung,
ein Kontrollmodul (34), ausgebildet zum:
Herstellen einer Funkverbindung mit einem Fahrzeugschlüssel (200) über die Schnittstelle (32),
Bestimmen eines Funkverbindungs-Pairing für die Funkverbindung zwischen dem Fahrzeugschlüssel (200) und dem Mobilgerät (300),
wobei für das Pairing des Fahrzeugschlüssels (200) mit dem Mobilgerät (300) eine Anwesenheit des Fahrzeugschlüssels (200) in einem Fahrzeug, welchem der Fahrzeugschlüssel (200) zugeordnet ist, vorausgesetzt wird.

12. Vorrichtung (30) gemäß Anspruch 11, wobei das Kontrollmodul ferner ausgebildet ist, Information über eine Geräteidentifikation mit dem Fahrzeugschlüssel (200) über die Funkverbindung auszutauschen.

13. Vorrichtung (30) gemäß Anspruch 12, wobei die Information über die Geräteidentifikation Geräteidentifikationsinformation eines Fahrzeugkontrollsystems (100), Geräteidentifikationsinformation des Fahrzeugschlüssels (200) und/oder Geräteidentifikationsinformation des Mobilgeräts (300) umfasst,
und/oder wobei das Kontrollmodul (34) ausgebildet ist, eine weitere Funkverbindung mit einem Fahrzeugkontrollsystem (100) basierend auf der Information über die Geräteidentifikation herzustellen.

14. Vorrichtung (10) gemäß Anspruch 12, wobei die Information über die Geräteidentifikation Verschlüsselungsinformation umfasst, und wobei das Kontrollmodul (34) ferner ausgebildet ist, die Funkverbindung und/oder die weitere Funkverbindung basierend auf der Verschlüsselungsinformation herzustellen und/oder zu verschlüsseln, und/oder wobei die Funkverbindung einer Bluetoothverbindung, einer Kurz-Distanz-Verbindung, einer Near-Field-Communication-Verbindung, NFC, oder einer Nahfunkverbindung entspricht.

## Claims

1. Apparatus (20) for a vehicle key (200), the apparatus (20) comprising
a first interface (22) designed to communicate with a vehicle control system (100),
a second interface (24) designed to communicate via a radio connection,
a control module (26) designed to:
receive proximity information from the vehicle control system (100) via the first interface (22),
establish a radio connection via the second interface (24) if the proximity information indicates spatial proximity of the vehicle key (200) to the vehicle control system (100),
wherein a vehicle (1000) comprises the vehicle control system (100), and wherein the spatial proximity of the vehicle key (200) to the vehicle control system (100) corresponds to a presence of the vehicle key (100) inside the vehicle (1000).

2. Apparatus (20) according to Claim 1, wherein the process of establishing the radio connection comprises interchanging radio connection parameters, and wherein the control module (26) is also designed to determine radio connection pairing for the radio connection.

3. Apparatus (20) according to Claim 1, wherein the control module (26) is designed to establish the radio connection to a mobile device (300),
and/or wherein the control module (26) is designed to establish the radio connection to the vehicle control system (100).

4. Apparatus (20) according to Claim 3, wherein the control module (26) is designed to interchange information relating to a device identification, and wherein the information relating to the device identification comprises device identification information relating to the vehicle key (200), device identification information relating to the mobile device (300) and/or device identification information relating to the vehicle control system (100) .

5. Apparatus (20) according to Claim 1, wherein the control module (26) is also designed to receive information relating to a connection trigger, and wherein the control module (26) is also designed to establish the radio connection on the basis of the information relating to the connection trigger, and/or wherein the radio connection corresponds to a Bluetooth connection, a short-distance connection, a near-field communication connection, NFC, or a short-range radio connection.

6. Apparatus (10) for a vehicle control system (100), the apparatus (10) comprising
a first interface (12) designed to communicate with a vehicle key (200),
a second interface (14) designed to communicate via a communication connection,
a control module (16) designed to:
receive information relating to a device identification from the vehicle key (200) via the first interface (12) or the second interface (14),
determine proximity information on the basis of spatial proximity of the vehicle key (200) to the vehicle control system (100), and
communicate via the second interface (14) on the basis of the information relating to the device identification if the proximity information indicates spatial proximity of the vehicle key (200) to the vehicle control system (100),
wherein a vehicle (1000) comprises the vehicle control system (100), and wherein the spatial proximity of the vehicle key (200) to the vehicle control system (100) corresponds to a presence of the vehicle key (100) inside the vehicle (1000).

7. Apparatus (10) according to Claim 6, wherein the control module (16) is designed to determine proximity information on the basis of spatial proximity of the vehicle key (200) to the vehicle control system (100), and wherein the control module (16) is also designed to provide the vehicle key (200) with the proximity information.

8. Apparatus (10) according to Claim 6, wherein the information relating to the device identification comprises device identification information relating to the vehicle key (200), and wherein the control module (16) is designed to establish the communication connection to the vehicle key (200) on the basis of the device identification information relating to the vehicle key (200), and/or wherein the information relating to the device identification comprises device identification information relating to a mobile device (300), and wherein the control module (16) is designed to establish the communication connection to the mobile device (300) on the basis of the device identification information relating to the mobile device (300).

9. Apparatus (10) according to Claim 6, wherein the information relating to the device identification comprises encryption information, and wherein the control module (16) is also designed to establish and/or encrypt the communication connection on the basis of the encryption information.

10. Apparatus (10) according to Claim 6, wherein the communication connection corresponds to a radio connection, a short-distance connection, a short-range radio connection or a wired connection.

11. Apparatus (30) for a mobile device (300), the apparatus (30) comprising
an interface (32) designed to communicate via a radio connection,
a control module (34) designed to:
establish a radio connection to a vehicle key (200) via the interface (32),
determine radio connection pairing for the radio connection between the vehicle key (200) and the mobile device (300),
wherein a presence of the vehicle key (200) in a vehicle, to which the vehicle key (200) is assigned, is presupposed for pairing the vehicle key (200) to the mobile device (300).

12. Apparatus (30) according to Claim 11, wherein the control module is also designed to interchange information relating to a device identification with the vehicle key (200) via the radio connection.

13. Apparatus (30) according to Claim 12, wherein the information relating to the device identification comprises device identification information relating to a vehicle control system (100), device identification information relating to the vehicle key (200) and/or device identification information relating to the mobile device (300),
and/or wherein the control module (34) is designed to establish a further radio connection to a vehicle control system (100) on the basis of the information relating to the device identification.

14. Apparatus (10) according to Claim 12, wherein the information relating to the device identification comprises encryption information, and wherein the control module (34) is also designed to establish and/or encrypt the radio connection and/or the further radio connection on the basis of the encryption information, and/or wherein the radio connection corresponds to a Bluetooth connection, a short-distance connection, a near-field communication connection, NFC, or a short-range radio connection.

## Revendications

1. Dispositif (20) pour une clé de véhicule (200), le dispositif (20) comprenant
une première interface (22), configurée pour la communication avec un système de contrôle de véhicule (100),
une deuxième interface (24), configurée pour la communication par le biais d'une liaison de radiocommunication,
un module de contrôle (26), configuré pour :
obtenir des informations de proximité de la part du système de contrôle de véhicule (100) par le biais de la première interface (22),
établir une liaison de radiocommunication par le biais de la deuxième interface (24) dans le cas où les informations de proximité indiquent une proximité spatiale de la clé de véhicule (200) par rapport au système de contrôle de véhicule (100),
un véhicule (1000) comportant le système de contrôle de véhicule (100), et la proximité spatiale de la clé de véhicule (200) par rapport au système de contrôle de véhicule (100) correspondant à une présence de la clé de véhicule (100) à l'intérieur du véhicule (1000).

2. Dispositif (20) selon la revendication 1, l'établissement de la liaison de radiocommunication comprenant un échange de paramètres de liaison de radiocommunication et le module de contrôle (26) étant en outre configuré pour déterminer un appariement de liaison de radiocommunication pour la liaison de radiocommunication.

3. Dispositif (20) selon la revendication 1, le module de contrôle (26) étant configuré pour établir la liaison de radiocommunication avec un appareil mobile (300) et/ou le module de contrôle (26) étant configuré pour établir la liaison de radiocommunication avec le système de contrôle de véhicule (100).

4. Dispositif (20) selon la revendication 3, le module de contrôle (26) étant configuré pour échanger des informations à propos de l'identification de l'appareil, et les informations à propos de l'identification de l'appareil comprenant des informations d'identification d'appareil de la clé de véhicule (200), des informations d'identification d'appareil de l'appareil mobile (300) et/ou des informations d'identification d'appareil du système de contrôle de véhicule (100).

5. Dispositif (20) selon la revendication 1, le module de contrôle (26) étant configuré pour obtenir des informations à propos d'un déclencheur de connexion et le module de contrôle (26) étant en outre configuré pour établir la liaison de radiocommunication en se basant sur les informations à propos du déclencheur de connexion et/ou la liaison de radiocommunication correspondant à une connexion Bluetooth, une connexion de courte distance, une connexion de communication en champ proche, NFC, ou une connexion radioélectrique de proximité.

6. Dispositif (10) pour un système de contrôle de véhicule (100), le dispositif (10) comprenant
une première interface (12), configurée pour la communication avec une clé de véhicule (200),
une deuxième interface (14), configurée pour la communication par le biais d'une liaison de radiocommunication,
un module de contrôle (16), configuré pour :
obtenir des informations à propos d'une identification d'appareil par le biais de la première interface (12) ou
de la deuxième interface (14) de la part de la clé de véhicule (200),
déterminer des informations de proximité en se basant sur une proximité spatiale de la clé de véhicule (200) par rapport au système de contrôle de véhicule (100), et communiquer le biais de la deuxième interface (14) en se basant sur les informations à propos de l'identification de l'appareil dans le cas où les informations de proximité indiquent une proximité spatiale de la clé de véhicule (200) par rapport au système de contrôle de véhicule (100),
un véhicule (1000) comportant le système de contrôle de véhicule (100), et la proximité spatiale de la clé de véhicule (200) par rapport au système de contrôle de véhicule (100) correspondant à une présence de la clé de véhicule (100) à l'intérieur du véhicule (1000).

7. Dispositif (10) selon la revendication 6, le module de contrôle (16) étant configuré pour déterminer des informations de proximité en se basant sur une proximité spatiale de la clé de véhicule (200) par rapport au système de contrôle de véhicule (100) et le module de contrôle (16) étant en outre configuré pour fournir les informations de proximité à la clé de véhicule (200).

8. Dispositif (10) selon la revendication 6, les informations à propos de l'identification de l'appareil comprenant des informations d'identification d'appareil de la clé de véhicule (200) et le module de contrôle (16) étant configuré pour établir la liaison de communication avec la clé de véhicule (200) en se basant sur les informations d'identification d'appareil de la clé de véhicule (200),
et/ou les informations à propos de l'identification de l'appareil comprenant des informations d'identification d'appareil d'un appareil mobile (300) et le module de contrôle (16) étant configuré pour établir la liaison de communication avec l'appareil mobile (300) en se basant sur les informations d'identification d'appareil de l'appareil mobile (300).

9. Dispositif (10) selon la revendication 6, les informations à propos de l'identification de l'appareil comprenant des informations de cryptage et le module de contrôle (16) étant en outre configuré pour établir et/ou pour crypter la liaison de communication en se basant sur les informations de cryptage.

10. Dispositif (10) selon la revendication 6, la liaison de communication correspondant à une liaison de radiocommunication, une connexion de courte distance, une connexion de communication en champ proche ou une connexion filaire.

11. Dispositif (30) pour un appareil mobile (300), le dispositif (30) comprenant
une interface (32), configurée pour la communication par le biais d'une liaison de radiocommunication,
un module de contrôle (34), configuré pour :
établir une liaison de radiocommunication avec une clé de véhicule (200) par le biais de l'interface (32),
déterminer un appariement de liaison de radiocommunication pour la liaison de radiocommunication entre la clé de véhicule (200) et l'appareil mobile (300),
une présence de la clé de véhicule (200) dans un véhicule qui est associé à la clé de véhicule (200) étant supposée pour l'appariement de la clé de véhicule (200) avec l'appareil mobile (300).

12. Dispositif (30) selon la revendication 11, le module de contrôle étant en outre configuré pour échanger des informations à propos d'une identification d'appareil avec la clé de véhicule (200) par le biais de la liaison de radiocommunication.

13. Dispositif (30) selon la revendication 12, les informations à propos de l'identification d'appareil comprenant des informations d'identification d'appareil d'un système de contrôle de véhicule (100), des informations d'identification d'appareil de la clé de véhicule (200) et/ou des informations d'identification d'appareil de l'appareil mobile (300) et/ou le module de contrôle (34) étant configuré pour établir une liaison de radiocommunication supplémentaire avec un système de contrôle de véhicule (100) en se basant sur les informations à propos de l'identification d'appareil.

14. Dispositif (10) selon la revendication 12, les informations à propos de l'identification d'appareil comprenant des informations de cryptage, et le module de contrôle (34) étant en outre configuré pour établir et/ou pour crypter la liaison de radiocommunication et/ou la liaison de radiocommunication supplémentaire en se basant sur les informations de cryptage, et/ou la liaison de radiocommunication correspondant à une connexion Bluetooth, une connexion de courte distance, une connexion de communication en champ proche, NFC, ou une connexion radioélectrique de proximité.
